# EUROPÄISCHE PATENTSCHRIFT

(11) **EP 3 181 856 B1**
(45) Veröffentlichungstag und Bekanntmachung des Hinweises auf die Patenterteilung: **17.11.2021**
(21) Anmeldenummer: 16002601.9
(22) Anmeldetag: 07.12.2016
(51) Int. Cl.: F02B 63/00, B25F 5/02, F02M 37/00, F02M 69/10, F02B 63/02

(54) **HANDGEFÜHRTES ARBEITSGERÄT MIT EINER STEUEREINRICHTUNG**
MANUALLY OPERATED WORKING DEVICE HAVING A CONTROL DEVICE
APPAREIL DE TRAVAIL MANUEL COMPRENANT UN DISPOSITIF DE COMMANDE

(30) Priorität: 15.12.2015 DE 102015016485
(43) Veröffentlichungstag der Anmeldung: 21.06.2017
(73) Patentinhaber: Andreas Stihl AG & Co. KG, 71336 Waiblingen (DE)
(72) Erfinder: Wolf, Günter, D-71570 Oppenweiler (DE); Kurzenberger, Jan, D-73257 Köngen (DE); Holger, Vollmer, D-78247 Hilzingen (DE); Förster, Marcel, D-71409 Schwaikheim (DE); Kapinsky, Ulrich, 71334 Waiblingen (DE)
(74) Vertreter: Reinhardt, Annette

(56) Entgegenhaltungen:
- EP-A1- 2 848 800
- EP-A2- 2 653 695
- EP-A2- 2 829 363
- DE-A1-102009 011 685
- DE-U1-202011 050 893
- US-A1- 2011 056 451
- None

## Beschreibung

Die Erfindung betrifft ein handgeführtes Arbeitsgerät mit einer Steuereinrichtung der im Oberbegriff des Anspruchs 1 angegebenen Gattung.

Aus der gattungsgemäßen DE 10 2011 120 465 A1 ist ein handgeführtes Arbeitsgerät, nämlich ein Trennschleifer bekannt. Der Trennschleifer ist von einem Verbrennungsmotor angetrieben. Zur Versorgung des Verbrennungsmotors mit Kraftstoff ist in einem Tankgehäuse des Trennschleifers ein Kraftstofftank ausgebildet. Der Kraftstoff wird dem Verbrennungsmotor über ein Kraftstoffventil zugeführt, das von einer Steuereinrichtung gesteuert ist. Die Steuereinrichtung ist oberhalb des Kraftstofftanks und auch oberhalb eines Ansaugkanals des Verbrennungsmotors angeordnet.

Aus der EP 2 848 800 A1 ist eine Motorsäge mit einer Zündsteuereinheit bekannt. Die Zündsteuereinheit ist am Außenumfang eines Lüfterrads angeordnet. Am Lüfterrad ist zumindest ein Permanentmagnet angeordnet, der mit einem Joch eines Zündgenerators zusammenwirkt. Der Zündgenerator umfasst die Zündsteuereinheit.

Aus der EP 2 653 695 A2 ist ein Arbeitsgerät mit einer Kraftstoffpumpe bekannt. Die Kraftstoffpumpe ist in einer Vertiefung an der Oberseite des Kraftstofftanks angeordnet.

Der Erfindung liegt die Aufgabe zugrunde, ein handgeführtes Arbeitsgerät der gattungsgemäßen Art zu schaffen, das einen vorteilhaften Aufbau besitzt.

Diese Aufgabe wird durch ein handgeführtes Arbeitsgerät mit einer Steuereinrichtung mit den Merkmalen des Anspruchs 1 gelöst.

Es ist vorgesehen, dass die Steuereinrichtung in der üblichen Abstellposition des Arbeitsgeräts seitlich neben dem Kraftstofftank angeordnet ist. Durch die Anordnung der Steuereinrichtung seitlich neben dem Kraftstofftank kann der zur Verfügung stehende Bauraum gut genutzt werden. Die Steuereinrichtung kann gegenüber dem Kraftstofftank fixiert werden, so dass sich eine einfache Anbindung der Steuereinrichtung ergibt. Die Anschlussleitungen, die die Steuereinrichtung mit den elektrischen Bauteilen verbinden, können günstig verlegt werden, insbesondere mindestens teilweise am Kraftstofftank oder im Bereich eines Tankgehäuses des Arbeitsgeräts, in dem der Kraftstofftank angeordnet ist.

Die elektronische Steuereinrichtung ist vorteilhaft so angeordnet, dass sich eine günstige Schwerpunktlage des Arbeitsgeräts ergibt. Dies ist bei Anordnung der Steuereinrichtung seitlich neben dem Kraftstofftank auf einfache Weise möglich. Ist das Arbeitsgerät eine Motorsäge, so ist der Schwerpunkt der Steuereinrichtung vorteilhaft nahe einer Längsmittelebene der Motorsäge, besonders bevorzugt nahe einer Längsmittelachse einer Führungsschiene der Motorsäge angeordnet. Dadurch wird eine gute Schwenkbarkeit der Motorsäge um die Längsmittelachse der Führungsschiene ermöglicht. Durch die Anordnung seitlich neben dem Kraftstofftank, der bei Motorsägen üblicherweise an der der Führungsschiene abgewandt liegenden Rückseite der Motorsäge angeordnet ist, kann das Gewicht der Steuereinrichtung das Gewicht einer an der Motorsäge gehaltenen Führungsschiene vorteilhaft mindestens teilweise ausgleichen. Dadurch kann eine günstige Schwerpunktlage, insbesondere im Bereich unterhalb eines die Motorsäge übergreifenden Griffrohrs, auch bei Motorsägen mit langer Führungsschiene erreicht werden.

Vorteilhaft ist die Steuereinrichtung in einer zu mindestens einer Seite offenen Aufnahme des Gehäuses angeordnet. Um eine gute Zugänglichkeit zu ermöglichen, ist die Steuereinrichtung insbesondere in einer in üblicher Abstellposition nach oben offenen Aufnahme des Gehäuses angeordnet. Die Steuereinrichtung liegt dadurch an ihrer Oberseite außerhalb der Aufnahme und für den Bediener zugänglich. Auch eine Anordnung der Steuereinrichtung in einer seitlich, nach vorne, nach hinten und/oder nach unten offenen Aufnahme des Gehäuses kann jedoch vorteilhaft sein. Durch die Anordnung der Steuereinrichtung in einer Aufnahme ist die Fixierung der Steuereinrichtung an dem Gehäuse vereinfacht. Gleichzeitig ist die Steuereinrichtung vor mechanischer Beschädigung gut geschützt. Eine besonders vorteilhafte Gestaltung ergibt sich, wenn die Steuereinrichtung in der Aufnahme von der in Abstellposition nach unten weisenden Unterseite des Arbeitsgeräts aus über mindestens eine Befestigungsschraube in der Aufnahme verschraubt ist. Dadurch wird auf einfache Weise eine Fixierung der Steuereinrichtung in der Aufnahme erreicht. Für die Fixierung wird kaum zusätzlicher Bauraum benötigt. Die Oberseite der Steuereinrichtung kann gut zugänglich gestaltet werden, da die Fixierung von der Unterseite erfolgt.

Bevorzugt besitzt das Gehäuse ein Tankgehäuse, in dem der Kraftstofftank ausgebildet ist, und die Aufnahme ist in dem Tankgehäuse ausgebildet. Die Aufnahme für die Steuereinrichtung kann dabei bevorzugt integral an dem Tankgehäuse ausgebildet sein. Das Tankgehäuse ist dabei vorteilhaft ein Gussteil, insbesondere ein Spritzgussteil aus Kunststoff. Für die Aufnahme werden dadurch keine zusätzlichen Bauteile benötigt. Die Aufnahme kann an dem Tankgehäuse seitlich neben dem Kraftstofftank in einem Bereich angeordnet werden, der für den Kraftstofftank nicht genutzt werden kann, beispielsweise, weil der Bereich der Gefahr mechanischer Beschädigungen ausgesetzt ist. Für die Steuereinrichtung sind mechanische Beschädigungen weniger kritisch, da die Steuereinrichtung mechanisch robust ausgebildet ist.

Ein einfacher Aufbau wird erreicht, wenn die Steuereinrichtung vom Kraftstofftank durch eine Wand des Tankgehäuses getrennt ist. Dabei grenzt der Kraftstofftank bevorzugt an der einen Seite der Wand an die Wand an, und die Aufnahme für die Steuereinrichtung grenzt an der gegenüberliegenden Seite der gleichen Wand an. Wanddoppelungen werden dadurch vermieden. Die Wand des Kraftstofftanks wird gleichzeitig als Wand für die Aufnahme für die Steuereinrichtung genutzt. Dadurch kann ein geringes Gesamtgewicht des Arbeitsgeräts erreicht werden. Der Kraftstofftank ist vorteilhaft von dem Verbrennungsmotor über mindestens ein Antivibrationselement schwingungsentkoppelt. Durch die Anordnung der Steuereinrichtung an dem Tankgehäuse, an dem auch der Kraftstofftank ausgebildet ist, ist auch die Steuereinrichtung von dem Verbrennungsmotor schwingungsentkoppelt. Dadurch kann die Belastung der Steuereinrichtung durch Vibrationen vergleichsweise gering gehalten werden.

Das Arbeitsgerät besitzt vorteilhaft eine Luftfiltereinrichtung, die mindestens ein Filterelement umfasst. Auch mehrere Filterelemente können vorteilhaft sein. Die Luftfiltereinrichtung kann auch zusätzlich zu dem Filterelement mindestens einen Fliehkraftabscheider umfassen. In der üblichen Abstellposition ist die Steuereinrichtung vorteilhaft unterhalb der Luftfiltereinrichtung angeordnet. Besonders bevorzugt ist die Luftfiltereinrichtung oberhalb des Kraftstofftanks und oberhalb der Steuereinrichtung angeordnet. Mindestens ein Steckkontakt ist vorteilhaft von einer Seite des Arbeitsgeräts und/oder von oben zugänglich, wenn ein Luftfilterdeckel des Arbeitsgeräts abgenommen ist. Der Luftfilterdeckel muss zur Reinigung der Luftfiltereinrichtung vom Bediener häufig abgenommen werden und ist deshalb üblicherweise leicht demontierbar. Bevorzugt ist bei abgenommenem Luftfilterdeckel oberhalb der Steuereinrichtung ein zu einer Längsseite des Arbeitsgeräts hin offener Raum gebildet. Die Öffnung zur Längsseite ist dabei vorteilhaft so groß, dass ein Bediener einen an der Steuereinrichtung eingesteckten Anschlussstecker mit zwei Fingern greifen und von dem Steckkontakt abziehen kann.

Ein Steckkontakt der Steuereinrichtung ist vorteilhaft bei mindestens teilweise abgenommener Luftfiltereinrichtung von der Oberseite aus zugänglich. Zugänglichkeit von der Oberseite bedeutet dabei, dass sich bei mindestens teilweise abgenommener Luftfiltereinrichtung in Abstellposition keine anderen Bauteile vertikal über der Steuereinrichtung befinden. Die Luftfiltereinrichtung ist üblicherweise einfach zu demontieren, da die Luftfiltereinrichtung regelmäßig gereinigt werden muss. Durch die Anordnung der Steuereinrichtung unterhalb der Luftfiltereinrichtung ist die Steuereinrichtung von der Luftfiltereinrichtung nach oben geschützt und mindestens teilweise abgedeckt. Dadurch ist ein versehentliches Beschädigen der Steuereinrichtung, insbesondere ein teilweises Abziehen von Anschlusssteckern an der Steuereinrichtung, durch den Bediener im üblichen Betrieb auch dann, wenn ein Luftfilterdeckel abgenommen ist, weitgehend vermieden. Um beispielsweise für Diagnosezwecke oder zum Austausch elektrischer Bauteile Zugang zu der Steuereinrichtung zu erhalten, muss lediglich die Luftfiltereinrichtung mindestens teilweise abgenommen werden. Bevorzugt müssen ein Filterelement und ein Luftfilterboden der Luftfiltereinrichtung abgenommen werden. Bei mindestens teilweise abgenommener Luftfiltereinrichtung ist die Steuereinrichtung dann von der Oberseite des Arbeitsgeräts aus zugänglich, so dass der Bediener einfach einen an der Steuereinrichtung eingesteckten Anschlussstecker greifen kann. Durch die Anordnung der Steuereinrichtung seitlich neben dem Kraftstofftank ist die Steuereinrichtung bevorzugt nahe einer Längsseite, insbesondere an einer Längsseite des Arbeitsgeräts angeordnet, so dass der Bediener von oben und aus einer seitlichen Richtung an die Oberseite der Steuereinrichtung greifen kann.

An dem Handgriff ist mindestens ein Bedienelement zur Bedienung des Verbrennungsmotors angeordnet. Der Handgriff ist dabei bevorzugt ein hinterer oder ein oberer Handgriff. Ein solcher Handgriff ist vorteilhaft in Längsrichtung des Arbeitsgeräts ausgerichtet. Die Längsmittelachse des Handgriffs liegt in einer Längsebene des Arbeitsgeräts. Die Längsebene ist dabei in Abstellposition senkrecht ausgerichtet und enthält die Längsmittelachse des Handgriffs. Bezogen auf die Längsebene ist die Steuereinrichtung in Abstellposition seitlich neben dem Kraftstofftank angeordnet. Dadurch kann die Steuereinrichtung in einem Bauraum angeordnet werden, der für andere Komponenten schlecht nutzbar ist. Durch die Anordnung seitlich neben dem Kraftstofftank ergibt sich außerdem eine günstige Führung der Anschlussleitungen des Arbeitsgeräts. Insbesondere zu einem Kraftstoffventil und einer Zündkerze des Verbrennungsmotors können kurze Anschlussleitungen realisiert werden. Die elektrischen Komponenten sind üblicherweise neben oder oberhalb der Steuereinrichtung angeordnet, so dass die Anschlussleitungen von einer Oberseite der Steuereinrichtung weg zu den elektrischen Bauteilen geführt werden können. Dadurch können vergleichsweise kurze Anschlussleitungen erreicht werden.

Die Steuereinrichtung ist vorteilhaft vergleichsweise schmal ausgebildet. Die Steuereinrichtung besitzt eine senkrecht zur Längsebene und in Abstellposition horizontal gemessene Breite. Die Breite der Steuereinrichtung beträgt vorteilhaft weniger als 70%, insbesondere weniger als 50% der senkrecht zur Längsebene und in Abstellposition horizontal gemessenen Breite des Kraftstofftanks. Die Breite der Steuereinrichtung und die Breite des Kraftstofftanks sind dabei jeweils die maximale Breite, also die größte senkrecht zur Längsebene und in Abstellposition horizontal zu messende Erstreckung. Vorteilhaft ist die Steuereinrichtung so angeordnet, dass ihre parallel zur Längsebene und in Abstellposition horizontal gemessene Länge größer als die Breite der Steuereinrichtung ist. Die Länge beträgt vorteilhaft mindestens das Doppelte der Breite der Steuereinrichtung. Dadurch, dass die Steuereinrichtung in Querrichtung des Arbeitsgeräts vergleichsweise schmal ausgebildet ist, kann der Kraftstofftank vergleichsweise breit ausgebildet werden, so dass für ein ausreichendes Volumen des Kraftstofftanks nur eine vergleichsweise geringe Höhe vorgesehen ist. Vorteilhaft sind der Kraftstofftank und die Steuereinrichtung näherungsweise gleich groß, so dass sich eine einheitliche Höhe des Tankgehäuses in diesem Bereich ergibt. Besonders bevorzugt überragt der Kraftstofftank die Steuereinrichtung, so dass auch an der Steuereinrichtung eingesteckte Anschlussstecker vor Beschädigungen geschützt sind. Die in Abstellposition in vertikaler Richtung gemessene Höhe der Steuereinrichtung ist vorteilhaft größer als die senkrecht zur Längsebene und in Abstellposition horizontal gemessene Breite. Die Höhe der Steuereinrichtung und die Länge der Steuereinrichtung können näherungsweise gleich groß sein. Die Höhe der Steuereinrichtung ist bevorzugt mindestens doppelt so groß wie die Breite der Steuereinrichtung.

Um ein einfaches Anschließen von elektrischen Bauteilen an die Steuereinrichtung zu erreichen, ist vorteilhaft vorgesehen, dass die Steuereinrichtung mindestens einen Stecckontakt besitzt, an dem mindestens ein Anschlussstecker eingesteckt ist. Der Anschlussstecker ist vorteilhaft über mindestens eine Anschlussleitung mit dem mindestens einen elektrischen Bauteil des Arbeitsgeräts verbunden. Vorteilhaft ist mindestens ein Anschlussstecker an einer in üblicher Abstellposition nach oben weisenden Oberseite der Steuereinrichtung angeordnet. Dadurch sind die Anschlussstecker leicht von der Oberseite des Arbeitsgeräts aus zugänglich. Bevorzugt überragen die Steckkontakte die Aufnahme. Dadurch wird die Zugänglichkeit zu den Steckkontakten und den Anschlusssteckern noch verbessert. Der Bediener muss nicht in die Aufnahme hineingreifen, um Anschlussstecker an Steckkontakten ein- oder auszustecken.

Das Arbeitsgerät besitzt vorteilhaft einen Luftfilterraum und einen Motorraum. Der Luftfilterraum ist dabei der Raum, in dem die Luftfiltereinrichtung mindestens teilweise angeordnet ist. Der Motorraum ist der Raum, in dem der Verbrennungsmotor angeordnet ist. Luftfilterraum und Motorraum bezeichnen mindestens teilweise geschlossene Räume im Gehäuse des Arbeitsgeräts. An einer Gehäusewand zwischen dem Luftfilterraum und dem Motorraum ist vorteilhaft mindestens ein Halter für eine Anschlussleitung festgelegt. In dem Halter kann mindestens eine Anschlussleitung fixiert und dadurch gut geführt werden. Durch die definierte Führung der Anschlussleitung wird eine Beschädigung der Anschlussleitung im Betrieb, beispielsweise aufgrund von Vibrationen und Relativbewegungen der Bauteile des Arbeitsgeräts zueinander, verhindert. Die Anschlussleitung ist in dem Halter vorteilhaft geklipst gehalten.

Die Steuereinrichtung ist bevorzugt eine Motorsteuerung, die mindestens ein elektrisches Bauteil des Verbrennungsmotors steuert. Der Verbrennungsmotor besitzt vorteilhaft eine Zündkerze, und ein Steckkontakt der Steuereinrichtung ist über eine Anschlussleitung mit der Zündkerze verbunden. Eine weitere elektrische Komponente des Verbrennungsmotors ist vorteilhaft ein Generator, der zur Erzeugung von elektrischer Energie dient. Vorteilhaft ist ein Steckkontakt der Steuereinrichtung über eine Anschlussleitung mit dem Generator verbunden. Ein elektrisches Bauteil des Verbrennungsmotors ist vorteilhaft ein Kraftstoffventil, das zur Zufuhr von Kraftstoff zum Verbrennungsmotor dient. Das Kraftstoffventil ist bevorzugt ein elektromagnetisches Ventil. Das Kraftstoffventil führt den Kraftstoff vorteilhaft unter niedrigem Druck von insbesondere 0 bar bis 2 bar Überdruck gegenüber dem Umgebungsdruck zu. Vorteilhaft ist ein Steckkontakt der Steuereinrichtung über eine Anschlussleitung mit dem Kraftstoffventil verbunden. Weitere elektrische Bauteile, die mit der Steuereinrichtung verbunden sind, können ein Stoppschalter und ein oder mehrere Sensoren des Verbrennungsmotors, beispielsweise ein Temperatursensor und/oder ein Drucksensor sein. Besonders bevorzugt besitzt das Arbeitsgerät mindestens eine Heizeinrichtung für einen Handgriff, und ein Steckkontakt ist über eine Anschlussleitung mit der Heizeinrichtung verbunden. Zum Ein- und Ausschalten der Heizeinrichtung ist vorteilhaft ein Schalter vorgesehen. Eine günstige Anordnung und vorteilhafte Verlegung der Anschlussleitungen kann erreicht werden, wenn benachbart zur Steuereinrichtung am Gehäuse eine Aufnahme für einen Schalter der mindestens einen Heizeinrichtung angeordnet ist. Dadurch ist die Länge der zwischen Steuereinrichtung und Schalter benötigten Anschlussleitung vergleichsweise kurz. Der Schalter kann zwischen der Steuereinrichtung und einem Handgriff, insbesondere einem Griffrohr des Arbeitsgeräts positioniert werden, so dass sich kurze Anschlussleitungen ergeben.

Das Arbeitsgerät ist vorteilhaft eine Motorsäge, die als Werkzeug eine umlaufend um die Führungsschiene angetriebene Sägekette besitzt. Die Längsebene der Motorsäge liegt vorteilhaft parallel zur Längsmittelebene der Führungsschiene. Der senkrecht zur Längsebene gemessene Abstand der Längsmittelebene der Führungsschiene zur Steuereinrichtung beträgt vorteilhaft höchstens 2 cm. Der Abstand ist dabei zu der nach außen weisenden Außenseite der Steuereinrichtung gemessen. Die Außenseite der Steuereinrichtung ist bevorzugt gegenüber der Längsmittelebene der Führungsschiene ins Gehäuse hinein versetzt. Es kann jedoch auch vorgesehen sein, dass die Steuereinrichtung von der Längsmittelebene der Führungsschiene geschnitten ist und gegenüber der Längsmittelebene der Führungsschiene nach außen versetzt ist. Der Kraftstofftank ist vorteilhaft gegenüber der Längsmittelebene der Führungsschiene ins Gehäuse der Motorsäge hinein, also in Richtung auf die Längsebene der Führungsschiene, versetzt angeordnet. Bevorzugt beträgt der senkrecht zur Längsebene gemessene Abstand der Längsmittelebene der Führungsschiene zum Kraftstofftank mindestens 3 cm. Der Abstand der der Längsmittelebene der Führungsschiene zugewandten Wand des Kraftstofftanks zur Längsebene ist dabei kleiner als der Abstand der Längsmittelebene der Führungsschiene zur Längsebene. Der Kraftstofftank ist demnach gegenüber der Längsmittelebene der Führungsschiene in Richtung auf die Längsebene versetzt angeordnet.

Vorteilhafte Ausgestaltungen können sich durch beliebige Kombinationen der Elemente des Ausführungsbeispiels ergeben.

Ein Ausführungsbeispiel der Erfindung wird im Folgenden anhand der Zeichnung erläutert. Es zeigen:
- Fig. 1: eine schematische Seitenansicht einer Motorsäge,
- Fig. 2: einen schematischen Schnitt durch die Motorsäge aus Fig. 1,
- Fig. 3: eine schematische Schnittdarstellung des Verbrennungsmotors der Motorsäge aus Fig. 1,
- Fig. 4: eine Draufsicht auf die Motorsäge aus Fig. 1 mit abgenommenem Luftfilterdeckel,
- Fig. 5: eine Seitenansicht der Motorsäge aus Fig. 1 mit abgenommenem Luftfilterdeckel,
- Fig. 6: eine Draufsicht auf jeweils einen Teil von Tankgehäuse und Motorgehäuse der Motorsäge aus Fig. 1,
- Fig. 7: die Anordnung aus Fig. 6 in perspektivischer Darstellung,
- Fig. 8: einen Schnitt durch die Anordnung aus den Figuren 6 und 7 in einer Schnittebene parallel zu einer Längsebene der Motorsäge,
- Fig. 9: das Tankgehäuse und eine Steuereinrichtung der Motorsäge in Explosionsdarstellung,
- Fig. 10: einen Schnitt durch die Anordnung aus den Figuren 6 und 7 senkrecht zu einer Längsebene der Motorsäge,
- Fig. 11: eine ausschnittsweise vergrößerte Darstellung des Bereichs der Steuereinrichtung aus Fig. 6,
- Fig. 12: eine perspektivische Darstellung der Steuereinrichtung und der Anschlussleitungen der Motorsäge,
- Fig. 13: eine ausschnittsweise vergrößerte Darstellung des Bereichs der Steuereinrichtung der Motorsäge mit Anschlussleitungen gemäß Fig. 12,
- Fig. 14: einen Schnitt parallel zur Längsebene durch die Steuereinrichtung aus Fig. 13,
- Fig. 15: eine Draufsicht auf das Tankgehäuse mit daran angeordneter Steuereinrichtung und Anschlussleitungen sowie elektrischen Bauteilen,
- Fig. 16: eine vergrößerte perspektivische Darstellung des Bereichs der Steuereinrichtung der Anordnung aus Fig. 15,
- Fig. 17: eine Draufsicht auf die Steuereinrichtung mit Anschlussleitungen und elektrischen Bauteilen,
- Fig. 18: eine perspektivische Darstellung der Anordnung aus Fig. 17.

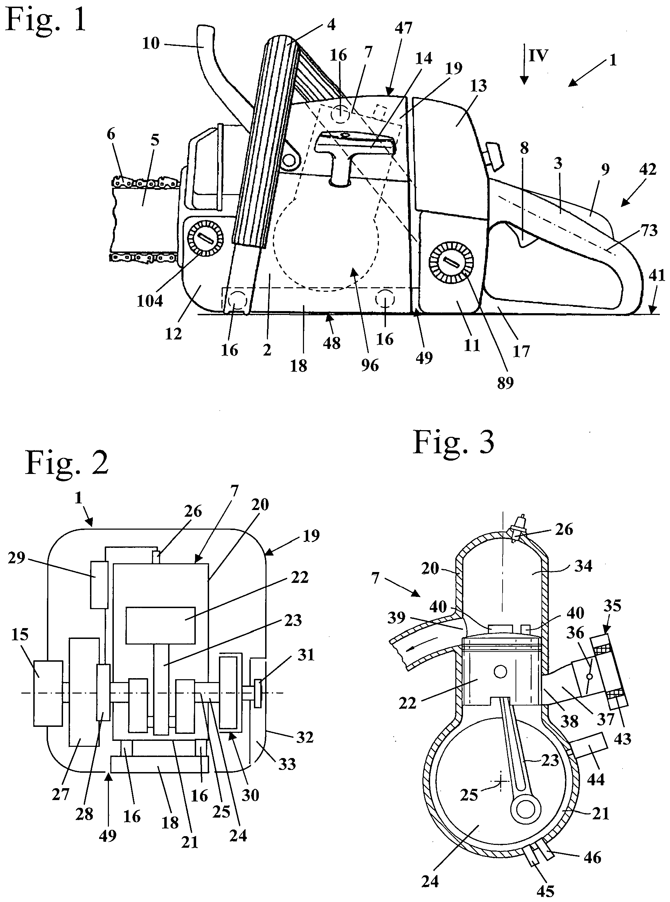

Fig. 1 zeigt als Ausführungsbeispiel für ein handgeführtes Arbeitsgerät eine Motorsäge 1.

Anstatt der Motorsäge 1 kann auch ein anderes handgeführtes, insbesondere ein tragbares Arbeitsgerät vorgesehen sein, beispielsweise ein Trennschleifer, ein Freischneider, ein Rasenmäher oder dgl. Die Motorsäge 1 besitzt ein Gehäuse 2, an dem ein erster Handgriff 3 und ein zweiter Handgriff 4 festgelegt sind. Der erste Handgriff 3 ist als hinterer Handgriff ausgebildet und besitzt eine Längsmittelachse 73. Am hinteren Handgriff 3 sind Bedienelemente, nämlich ein Gashebel 8 und eine Gashebelsperre 9 zur Bedienung eines im Gehäuse 2 angeordneten Verbrennungsmotors 7 angeordnet. Der Verbrennungsmotor 7 ist im Ausführungsbeispiel als Zweitaktmotor ausgebildet. Der Verbrennungsmotor kann jedoch auch ein Viertaktmotor, insbesondere ein gemischgeschmierter Viertaktmotor sein. Der Verbrennungsmotor 7 ist insbesondere ein Verbrennungsmotor mit Niederdruckeinspritzung, also ein Verbrennungsmotor, dem der Kraftstoff über ein Kraftstoffventil unter niedrigem Druck, vorzugsweise 0 bar bis 2 bar Überdruck gegenüber dem Umgebungsdruck, zugeführt wird. Auch eine Kraftstoffzufuhr über einen Vergaser kann vorteilhaft sein. Der Vergaser kann dabei ein elektronischer Vergaser sein, also ein elektronisch angesteuertes Ventil zur Kraftstoffzufuhr besitzen. Der Verbrennungsmotor 7 ist vorzugsweise ein Einzylindermotor. Aus dem Gehäuse 2 ragt ein in Fig. 1 gezeigter Anwerfgriff 14, der zum Starten des Verbrennungsmotors 7 dient.

Der zweite Handgriff 4 ist im Ausführungsbeispiel als Griffrohr ausgebildet und übergreift das Gehäuse 2. Die Motorsäge 1 besitzt eine Führungsschiene 5, die an der dem ersten Handgriff 3 gegenüberliegenden Seite des Gehäuses 2 nach vorne ragt. An der Führungsschiene 5 ist eine Sägekette 6 umlaufend angeordnet, die vom Verbrennungsmotor 7 angetrieben ist. An der der Sägekette 6 zugewandten Seite des zweiten Handgriffs 4 ist ein Handschutz 10 angeordnet. Der Handschutz 10 ist vorteilhaft schwenkbar gegenüber dem Gehäuse 2 gelagert und dient zum Betätigen einer nicht gezeigten Bremsvorrichtung für die Sägekette 6.

Das Gehäuse 2 umfasst ein Tankgehäuse 17 und ein Motorgehäuse 19. Im Tankgehäuse 17 ist ein Kraftstofftank 11 ausgebildet. Am Tankgehäuse 17 sind die Handgriffe 3 und 4 ausgebildet. Das Tankgehäuse 17 bildet damit ein Griffgehäuse. Das Tankgehäuse 17 ist vorteilhaft ein komplexes Bauteil, das aus mehreren Bauteilen zusammengesetzt sein kann. Der Kraftstofftank 11 ist benachbart zum ersten Handgriff 3 an der dem Verbrennungsmotor 7 zugewandten Seite des ersten Handgriffs 3 angeordnet. Der Kraftstofftank 11 besitzt einen Verschlussdeckel 89. Im Tankgehäuse 17 ist ein Schmieröltank 12 ausgebildet, der Öl zur Sägekette 6 zuführt. Der Schmieröltank 12 ist benachbart zu einer Vorderseite der Motorsäge 1 angeordnet, an der die Führungsschiene nach vorne ragt. Der Schmieröltank 12 besitzt einen Verschlussdeckel 104. Die Verschlussdeckel 89 und 104 sind auf der gleichen Längsseite 96 der Motorsäge 1 angeordnet.

Das Tankgehäuse 17 umfasst im Ausführungsbeispiel außerdem einen Ausleger 18, der in Fig. 1 mit gestrichelter Linie eingezeichnet ist und der vom Motorgehäuse 19 übergriffen ist. Das Motorgehäuse 19 ist am Tankgehäuse 17 über Antivibrationselemente 16 schwingungsdämpfend gelagert. Im Ausführungsbeispiel sind zwei Antivibrationselemente 16 im Bereich des Auslegers 18 vorgesehen und ein weiteres Antivibrationselement 16 am zweiten Handgriff 4. Auch eine andere Anzahl und/oder Lage der Antivibrationselemente 16 kann vorteilhaft sein. Das Motorgehäuse 19 und das Tankgehäuse 17 sind über einen Schwingspalt 49 voneinander getrennt, der von den Antivibrationselementen 16 überbrückt ist und der Relativbewegungen zwischen dem Tankgehäuse 17 und dem Motorgehäuse 19 zulässt. Das Motorgehäuse 19 ist gegenüber dem Tankgehäuse 17 schwingungsentkoppelt gelagert.

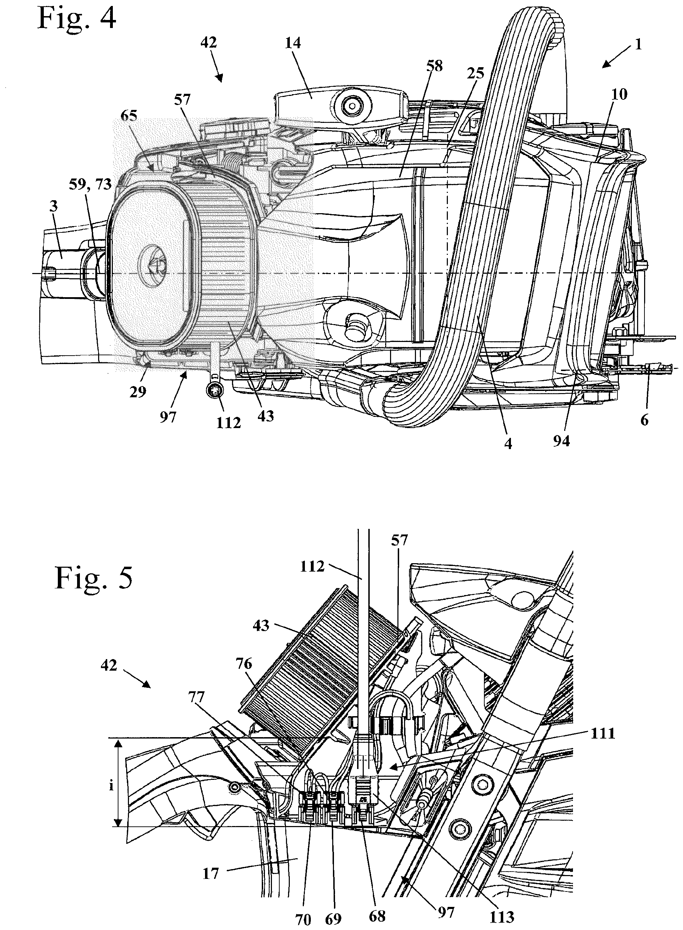

Fig. 1 zeigt die Motorsäge 1 in einer üblichen Abstellposition 42, in der die Motorsäge 1 auf einer horizontalen, ebenen Abstellfläche 41 abgestellt ist. In dieser Abstellposition 42 liegt der Ausleger 18 benachbart zum Boden, und die Handgriffe 3 und 4 sind in einem Abstand zur Abstellfläche 41 angeordnet und können vom Bediener leicht gegriffen werden. In der Abstellposition 42 ist oberhalb des Kraftstofftanks 11 ein Luftfilterdeckel 13 angeordnet, der einen in Fig. 4 gezeigten Luftfilterraum 65 abdeckt. Auch der Luftfilterdeckel 13 ist Teil des Tankgehäuses 17.

Die Motorsäge 1 besitzt eine Unterseite 48, die in der Abstellposition 42 benachbart zur Abstellfläche 41 angeordnet ist. Die Unterseite 48 ist die in Abstellposition 42 unten liegende Seite der Motorsäge 1. Die Unterseite 48 kann dabei flächig auf der Abstellfläche 41 aufliegen. Es kann jedoch auch vorgesehen sein, dass die Motorsäge 1 Füße zum Abstellen auf der Abstellfläche 41 aufweist. Im Ausführungsbeispiel liegt die Motorsäge 1 mit dem unteren Bereich des ersten Handgriffs 3 und dem unteren Bereich des zweiten Handgriffs 4 auf der Abstellfläche 41 auf. Die Motorsäge 1 besitzt eine Oberseite 47, die in der Abstellposition 42 nach oben weist. An der Oberseite 47 übergreift der zweite Handgriff 4 das Gehäuse 2.

Fig. 2 zeigt die Antriebseinheit der Motorsäge 1 schematisch. Der Verbrennungsmotor 7 besitzt einen Zylinder 20, in dem ein Kolben 22 hin- und hergehend gelagert ist. Der Kolben 22 treibt über ein Pleuel 23 eine in einem Kurbelgehäuse 21 um eine Drehachse 25 drehbar gelagerte Kurbelwelle 24 an. Das Kurbelgehäuse 21 ist über die Antivibrationselemente 16 am Ausleger 18 festgelegt. In Fig. 2 ist die Anordnung der Antivibrationselemente 16 lediglich schematisch gezeigt und entspricht nicht der tatsächlichen räumlichen Anordnung. In den Zylinder 20 ragt eine Zündkerze 26, die mit einer Steuereinrichtung 29 verbunden ist. Die Steuereinrichtung 29 ist mit einem Generator 28 verbunden, der bei einer Drehung der Kurbelwelle 24 Energie erzeugt und die Zündkerze 26 mit Zündenergie versorgt. Der Generator 28 besitzt einen am Kurbelgehäuse 21 festgelegten, nicht gezeigten Stator. Ein Rotor des Generators 28 ist mit einem Gebläserad 27 verbunden, das drehfest auf der Kurbelwelle 24 angeordnet ist. An der dem Kurbelgehäuse 21 gegenüberliegenden Seite des Gebläserads 27 ist eine Starteinrichtung 15 angeordnet. Die Starteinrichtung 15 ist im Ausführungsbeispiel als Seilzugstarter ausgebildet und weist den Anwerfgriff 14 (Fig. 1) auf. Die Starteinrichtung 15 dient zum Anwerfen des Verbrennungsmotors 7. An der der Starteinrichtung 15 und dem Gebläserad 27 gegenüberliegenden Seite des Kurbelgehäuses 21 ist eine Fliehkraftkupplung 30 angeordnet, über die die Kurbelwelle 24 ein Kettenrad 31 antreibt. Am Kettenrad 31 ist die Sägekette 6 geführt und wird von diesem angetrieben. Das Kettenrad 31 ist in einem Kettenradraum 33 angeordnet, der von einem in Fig. 2 schematisch gezeigten Kettenraddeckel 32 abgedeckt ist.

Fig. 3 zeigt den Aufbau des Verbrennungsmotors 7 im Einzelnen. Die Zündkerze 26 ragt vorzugsweise in einen im Zylinder 20 ausgebildeten Brennraum 34. Der Brennraum 34 ist vom Kolben 22 begrenzt. Im Bereich des in Fig. 3 gezeigten unteren Totpunkts des Kolbens 22 ist der Innenraum des Kurbelgehäuses 21 über Überströmkanäle 40 mit dem Brennraum 34 verbunden. Am Zylinder 20 mündet ein Ansaugkanal 37 mit einer Einlassöffnung 38. Die Einlassöffnung 38 ist vom Kolben 22 gesteuert. Aus dem Brennraum 34 führt eine vom Kolben 22 gesteuerte Auslassöffnung 39. Zur Steuerung der dem Verbrennungsmotor 7 zugeführten Luftmenge ist im Ansaugkanal 37 ein Drosselelement 36, insbesondere eine Drosselklappe oder eine Steuerwalze angeordnet. Das Arbeitsgerät besitzt eine Luftfiltereinrichtung 35. Die Luftfiltereinrichtung 35 umfasst ein Filterelement 43, über das Umgebungsluft in den Ansaugkanal 37 angesaugt wird. Es können auch mehrere Filterelemente für die Luftfiltereinrichtung 35 vorgesehen sein. Es kann auch zweckmäßig sein, dass die Luftfiltereinrichtung 35 einen oder mehrere Fliehkraftabscheider besitzt, insbesondere, wenn das Arbeitsgerät ein Trennschleifer ist. Der Ansaugkanal 37 kann, wie im Ausführungsbeispiel gezeigt, eine Kanalröhre umfassen. Der Verbrennungsmotor 7 kann jedoch auch ein mit Spülvorläge arbeitender Zweitaktmotor sein, dessen Ansaugkanal in einen Gemischkanal und einen Luftkanal aufgeteilt ist.

Zur Zufuhr von Kraftstoff ist im Ausführungsbeispiel ein Kraftstoffventil 44 vorgesehen, das am Kurbelgehäuse 21 mündet. Das Kraftstoffventil 44 führt den Kraftstoff vorteilhaft unter niedrigem Druck, insbesondere unter 0 bar bis 2 bar Überdruck gegenüber dem Umgebungsdruck in den Kurbelgehäuseinnenraum zu. Auch eine Zufuhr von Kraftstoff in den Ansaugkanal 37 oder einen Überströmkanal 40 kann vorteilhaft sein.

Zur Steuerung des Verbrennungsmotors 7 im Betrieb sind am Kurbelgehäuse 21 vorteilhaft ein Drucksensor 45 und ein Temperatursensor 46 vorgesehen. Über den Drucksensor 45 und den Temperatursensor 46 können Betriebsparameter des Verbrennungsmotors 7 ermittelt und der Zündzeitpunkt und die zuzuführende Kraftstoffmenge gesteuert werden.

Die Steuereinrichtung 29 ist eine Motorsteuereinrichtung und steuert wesentliche, für den Betrieb des Verbrennungsmotors 7 benötigte Bauteile. Dies ist insbesondere die Zündkerze 26 und das Kraftstoffventil 44. Im Ausführungsbeispiel sind auch der Temperatursensor 46 und der Drucksensor 45 mit der Steuereinrichtung 29 verbunden. Auch weitere elektrische Komponenten der Motorsäge 1 können mit der Steuereinrichtung 29 verbunden sein.

Im Betrieb des Verbrennungsmotors 7 wird beim Aufwärtshub des Kolbens 22 über den Ansaugkanal 37 und die Einlassöffnung 38 Verbrennungsluft durch die Luftfiltereinrichtung 35 angesaugt. Beim darauf folgenden Abwärtshub des Kolbens 22 wird die Verbrennungsluft im Kurbelgehäuse 21 komprimiert. Über das Kraftstoffventil 44 wird zu vorgegebenen Zeitpunkten Kraftstoff zugeführt. Die Kraftstoffzufuhr erfolgt dabei insbesondere in den Innenraum des Kurbelgehäuses 21. Beim nächsten Abwärtshub des Kolbens 22 strömt das komprimierte Kraftstoff/Luft-Gemisch aus dem Kurbelgehäuse 21 über die Überströmkanäle 40 in den Brennraum 34 ein, sobald die Überströmkanäle 40 zum Brennraum 34 öffnen. Im Bereich des oberen Totpunkts des Kolbens 22 erfolgt die Zündung des Kraftstoff/Luft-Gemischs im Brennraum 34 durch die Zündkerze 26. Die darauf folgende Verbrennung beschleunigt den Kolben 22 in Richtung auf das Kurbelgehäuse 21. Sobald der Auslass vom abwärts fahrenden Kolben 22 geöffnet wird, strömen die Abgase aus dem Brennraum 34 aus. Über die Überströmkanäle 40 strömt frisches Kraftstoff/Luft-Gemisch aus dem Kurbelgehäuse 21 in den Brennraum 34 nach.

Im Ausführungsbeispiel sind das Kraftstoffventil 44, der Drucksensor 45 und der Temperatursensor 46, wie auch der Generator 28 und die Zündkerze 26, mit der Steuereinrichtung 29 verbunden. Bei der Wartung des Arbeitsgeräts ist es zweckmäßig, auf die Daten der Steuereinrichtung 29 zuzugreifen. Hierzu kann beispielsweise der Anschluss der Zündkerze 26 an der Steuereinrichtung 29 zum Anschluss einer Diagnoseeinrichtung wie beispielsweise eines externen PCs genutzt werden. Auch für den Austausch elektrischer Bauteile ist es zweckmäßig, wenn die Steuereinrichtung 29 elektrische Stecckontakte besitzt, die gut zugänglich sind, so dass ein Bauteil an der Steuereinrichtung ausgesteckt und ein Ersatzbauteil an der Steuereinrichtung 29 eingesteckt werden kann.

Fig. 4 zeigt die Motorsäge 1 mit abgenommenem Luftfilterdeckel 13. Unter dem Luftfilterdeckel 13 ist das Filterelement 43 angeordnet, das im Ausfuhrungsbeispiel als Rundfilter, nämlich als Papierfilter, ausgebildet ist. Das Filterelement 43 ist auf einem Luftfilterboden 57 angeordnet, der die darunter liegenden Bauteile weitgehend abdeckt. Wie Fig. 4 auch zeigt, ist die Steuereinrichtung 29 in der Abstellposition 42 vorzugsweise unterhalb des Filterelements 43 und unterhalb des Luftfilterbodens 57 angeordnet.

Die Motorsäge 1 besitzt eine Längsebene 59. Die Längsebene 59 enthält die Längsmittelachse 73 des ersten Handgriffs 3 und verläuft in der gezeigten Abstellposition 42 senkrecht, also in der Darstellung in Fig. 4 senkrecht zur Blattebene. Bei einer Motorsäge 1 verläuft die Längsebene 59 parallel zu einer Längsmittelebene 94 der Führungsschiene 5. Die Längsmittelebene 94 ist in Fig. 4 schematisch eingezeichnet. Die Längsmittelebene 94 verläuft durch eine an der Führungsschiene 5 (Fig. 1) angeordnete Führungsnut und schneidet die Sägekette 6 über ihre gesamte Länge. Die Längsebene 59 verläuft senkrecht zu der in Fig. 4 schematisch eingezeichneten Drehachse 25 der Kurbelwelle 24.

Fig. 5 zeigt die Motorsäge 1 in Seitenansicht mit abgenommenem Luftfilterdeckel 13. Wie Fig. 5 zeigt, ist am Steckkontakt 68 eine Diagnoseleitung 112 mit einem Anschlussstecker 113 eingesteckt. Die Diagnoseleitung 112 dient vorteilhaft zur Verbindung mit einer Diagnoseeinrichtung wie beispielsweise einem PC. Die Diagnoseleitung 112 ist auch in Fig. 4 gezeigt. In der Längsseite 97 der Motorsäge 1 ist bei abgenommenem Luftfilterdeckel 13 eine Öffnung 111 gebildet, die sich oberhalb der Steuereinrichtung 29 (Fig. 4) erstreckt. Die Öffnung 111 besitzt in Abstellposition 42 eine in vertikaler Richtung gemessene größte Höhe i, die vorteilhaft mindestens 4 cm, insbesondere mindestens 5 cm, bevorzugt mindestens 6 cm beträgt. Die Höhe i muss dabei nicht über die gesamte Breite der Öffnung 11 konstant sein, sondern kann, insbesondere in den Randbereichen der Öffnung 111, auch kleiner sein. Die Öffnung 111 ist so ausgebildet, dass ein Bediener von der Längsseite 97 durch die Öffnung 111 zu den Steckkontakten 68, 69, 70 und insbesondere auch zu dem in Fig. 5 nicht gezeigten Steckkontakt 67 greifen und Anschlussstecker 113, 76 und 77 ein- oder ausstecken kann. Hierzu ist vorteilhaft keine Demontage des Filterelements 43 und/oder des Luftfilterbodens 57 notwendig. Die Anschlussstecker 76, 77 an den Steckkontakten 69 und 70 werden im Folgenden noch näher beschrieben. In an der Motorsäge 1 festgelegtem Zustand verschließt der Luftfilterdeckel 13 die Öffnung 111 weitgehend, insbesondere vollständig, so dass die Steuereinrichtung 29 vor Verschmutzungen und Beschädigungen geschützt ist.

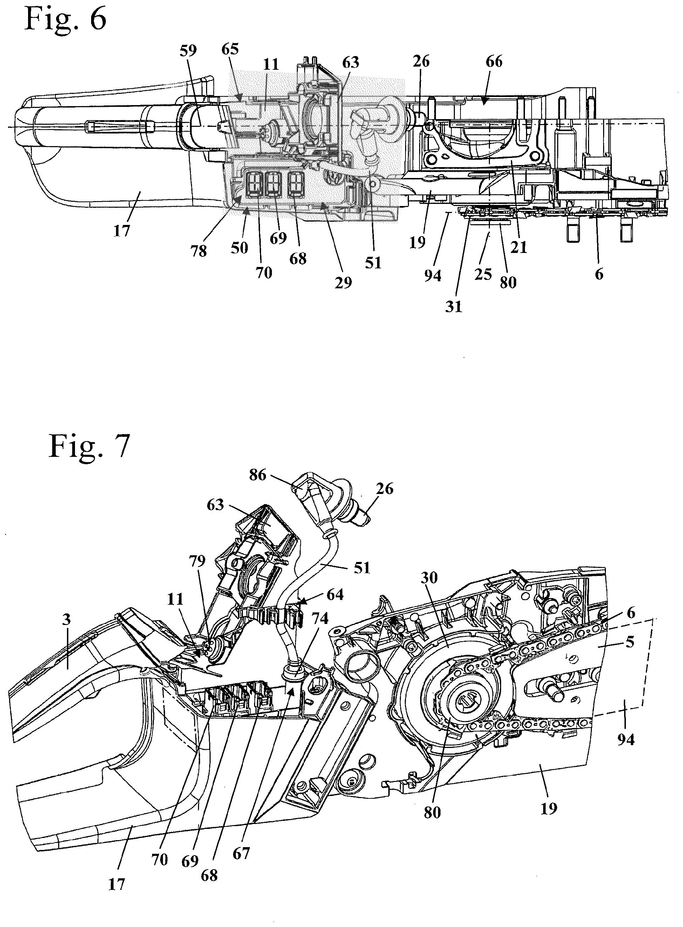

Fig. 6 zeigt einen Teil des Tankgehäuses 17 sowie einen Teil des Motorgehäuses 19 bei abgenommenem Filterelement 43 und abgenommenem Luftfilterboden 57. In Fig. 6 ist das Kurbelgehäuse 21 des Verbrennungsmotors 7 teilweise gezeigt. Der Zylinder 20 des Verbrennungsmotors 7 ist in Fig. 6 abgenommen. Fig. 6 zeigt auch die Drehachse 25 der Kurbelwelle 24. Unterhalb des Luftfilterbodens 57 ist der Kraftstofftank 11 angeordnet, der in Fig. 6 nur teilweise dargestellt ist. Der Kraftstofftank 11 ist integral im Tankgehäuse 17 ausgebildet. Bezogen auf die Längsebene 59 ist seitlich neben dem Kraftstofftank 11 eine Aufnahme 50 im Tankgehäuse 17 ausgebildet, die zur Oberseite 47 (Fig. 1) der Motorsäge 1 hin offen ist. Die Aufnahme 50 ist vom Luftfilterboden 57, dem Filterelement 43 (Fig. 4) sowie dem Luftfilterdeckel 13 zumindest teilweise abgedeckt. In der Aufnahme 50 ist die Steuereinrichtung 29 angeordnet. Die Steuereinrichtung 29 ist eine elektronische Steuereinrichtung, die einen Mikroprozessor besitzt. Die Steuereinrichtung 29 besitzt eine in Abstellposition 42 nach oben weisende Oberseite 78. An der Oberseite 78 sind Steckkontakte 68, 69, 70 zur Verbindung mit elektrischen Bauteilen des Arbeitsgeräts angeordnet. Wie Fig. 6 zeigt, sind die Steckkontakte 68, 69, 70 von der Oberseite 47 (Fig. 1) der Motorsäge 1 aus zugänglich, wenn, wie in Fig. 6 gezeigt, der Luftfilterboden 57, das Filterelement 43 und der Luftfilterdeckel 13 abgenommen sind. An der Steuereinrichtung 29 ist an einem weiteren, in Fig. 7 gezeigten Steckkontakt 67 eine Anschlussleitung 51 zur Verbindung mit der Zündkerze 26 angeschlossen. Auch der Stecckontakt 67 ist an der Oberseite 78 der Steuereinrichtung 29 angeordnet.

Fig. 7 zeigt die Anordnung aus Fig. 6 in perspektivischer Darstellung. In Fig. 7 ist auch die Längsmittelebene 94 schematisch gezeigt. Am Tankgehäuse 17 ist eine Gehäusewand 63 ausgebildet, die, wie auch Fig. 7 zeigt, quer, im Ausführungsbeispiel senkrecht zur Längsmittelebene 94 und zur Längsebene 59 ausgerichtet ist. In Fig. 7 ist ein Tankentlüftungsventil 79 gezeigt, das im Ausführungsbeispiel an der Oberseite des Kraftstofftanks 11 angeordnet ist. Die Gehäusewand 63 trennt den Luftfilterraum 65 von einem Motorraum 66. Der Motorraum 66 ist der Innenraum des Gehäuses 2 (Fig. 1), in dem der Verbrennungsmotor 7 (Fig. 1) angeordnet ist. In den Figuren 6 und 7 ist auch eine Abdeckscheibe 80 gezeigt, die das Kettenrad 31 (Fig. 6) abdeckt.

Fig. 7 zeigt die Anordnung mehrerer Steckkontakte 67, 68, 69, 70. In der Darstellung in Fig. 7 ist am ersten Steckkontakt 67 ein Anschlussstecker 74 eingesteckt, an dem die Anschlussleitung 51 angeschlossen ist. Die Anschlussleitung 51 ist mit einem Zündkerzenstecker 86 verbunden, an dem die Zündkerze 26 angeordnet ist. Die Anschlussleitung 51 ist an einem Halter 64 geklemmt gehalten. Der Halter 64 ist im Ausführungsbeispiel als separates Bauteil, insbesondere aus Kunststoff, ausgebildet und seitlich an der Gehäusewand 63 angeklipst. Es kann jedoch auch vorgesehen sein, den Halter 64 einteilig mit der Gehäusewand 63 auszubilden oder auf andere Weise an der Gehäusewand 63 zu befestigen.

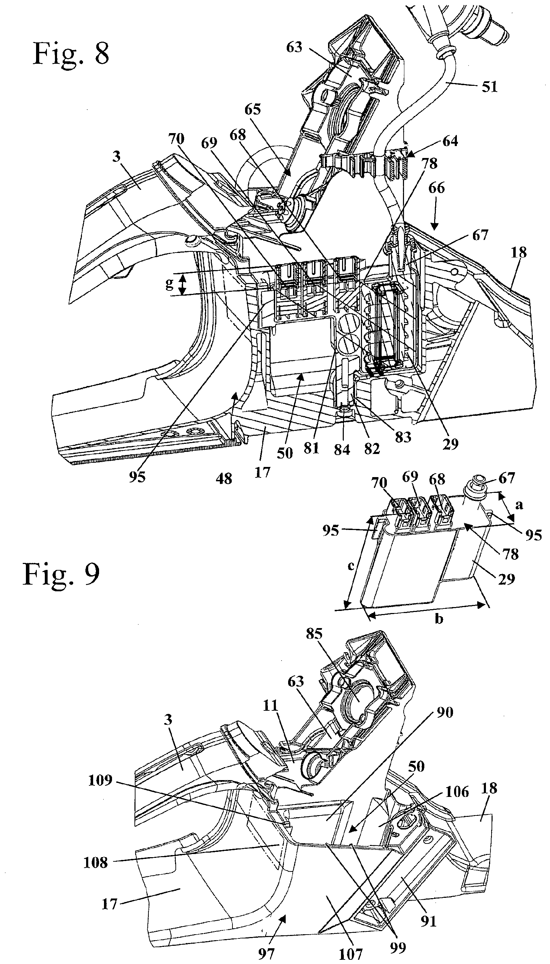

Fig. 8 zeigt die Anordnung der Steuereinrichtung 29 in der Aufnahme 50 im Einzelnen. Die Steuereinrichtung 29 ist in der Darstellung in Fig. 8 geschnitten gezeigt. Die Steuereinrichtung 29 besitzt ein Steuerungsgehäuse 81, in dem die Komponenten der Steuereinrichtung 29 vorzugsweise in einer Vergussmasse vergossen sind. Dadurch sind die elektronischen Komponenten im Steuerungsgehäuse 81 positioniert und gehalten und gleichzeitig vor Umgebungseinflüssen wie Feuchtigkeit, hohen Temperaturen oder dgl. geschützt.

Wie Fig. 8 zeigt, besitzt die Steuereinrichtung 29 im Ausführungsbeispiel einen Fortsatz 82, der in eine Vertiefung 83 am Boden der Aufnahme 50 ragt. Dadurch ist die Steuereinrichtung 29 in der Aufnahme 50 vorpositioniert. Zur Positionierung der Steuereinrichtung 29 in Längsrichtung sind Rippen 95 an der in Richtung auf den Handgriff 3 und der in entgegengesetzter Richtung ragenden Seite der Steuereinrichtung 29 vorgesehen. In Fig. 8 ist eine der Rippen 95 geschnitten gezeigt. Fig. 9 zeigt beide Rippen 95 in perspektivischer Ansicht.

Wie Fig. 8 zeigt, ist die Steuereinrichtung 29 in der Aufnahme 50 über eine Befestigungsschraube 84 gehalten. Die Befestigungsschraube 84 ist von der Unterseite 48 der Motorsäge 1 in die Steuereinrichtung 29 eingeschraubt. Dadurch ist die Steuereinrichtung 29 in der Aufnahme 50 fixiert. Die Befestigungsschraube 84 ist leicht zugänglich, so dass die Steuereinrichtung 29 leicht fixiert oder aus der Aufnahme 50 gelöst werden kann. Die Befestigungsschraube 84 wirkt in der Richtung, in der auch Auszugskräfte an den Stecckontakten 67, 68, 69 und 70 aufgebracht werden. Die Befestigungsschraube 84 verhindert dadurch, dass sich die Steuereinrichtung 29 aus der Aufnahme 50 bewegen kann, wenn Anschlussstecker von den Steckkontakten 67, 68, 69, 70 abgezogen werden.

Wie Fig. 8 zeigt, ragen die Steckkontakte 67, 68, 69, 70 über die Oberseite 78 der Steuereinrichtung 29 hinaus. Im Ausführungsbeispiel besitzen die Steckkontakte 68, 69, 70 einen Überstand g gegenüber der Oberseite 78, der mindestens 5 mm beträgt. Der Stecckontakt 67 ist für Hochspannungen geeignet und kann einen noch größeren Überstand gegenüber der Oberseite 78 aufweisen.

Fig. 9 zeigt die Gestaltung der Aufnahme 50 im Einzelnen. Die Aufnahme 50 ist als nach oben offene Tasche ausgebildet. Die Aufnahme 50 ist von einer dem Handgriff 3 abgewandten vorderen Seitenwand 106, einer an der Längsseite 97 angeordneten Seitenwand 107, einer dem hinteren Handgriff 3 zugewandten hinteren Seitenwand 108 sowie einer Wand 90 begrenzt. Die Seitenwände 106, 107 und 108 sind Außenwände des Tankgehäuses 17. Die Wand 90 ist eine Zwischenwand des Tankgehäuses 17 und trennt die Aufnahme 50 vom Innenraum des Kraftstofftanks 11. Die Aufnahme 50 und der Kraftstofftank 11 grenzen dabei an gegenüberliegenden Seiten an die Wand 90 an. Die Seitenwände 106, 107 und 108 und die Wand 90 stehen quer, insbesondere senkrecht zueinander, so dass die Aufnahme 50 bei einem Schnitt in Abstellposition 42 in horizontaler Richtung einen näherungsweise rechteckigen Querschnitt besitzt. Im Ausführungsbeispiel sind die Seitenwände 106 und 108 etwa senkrecht zur Längsebene 59 (Fig. 6) und die Seitenwand 107 und die Wand 90 etwa parallel zur Längsebene 59 ausgerichtet. Auch eine leicht schräge Anordnung der Aufnahme 50 im Tankgehäuse 17 kann jedoch vorteilhaft sein.

Die Steuereinrichtung 29 von oben in die Aufnahme 50 eingesteckt werden, wenn der Luftfilterboden 57 (Fig. 4) abgenommen ist. Die Rippen 95 positionieren die Steuereinrichtung 29 in der Aufnahme 50. An der hinteren Seitenwand 108 ist eine Aufnahme 109 für eine Rippe 95 ausgebildet. Die Aufnahme 109 ist durch zwei Stege gebildet, zwischen denen die Rippe 95 geführt ist. Eine entsprechende Aufnahme ist vorteilhaft an der Seitenwand 106 für die andere der Rippen 95 ausgebildet.

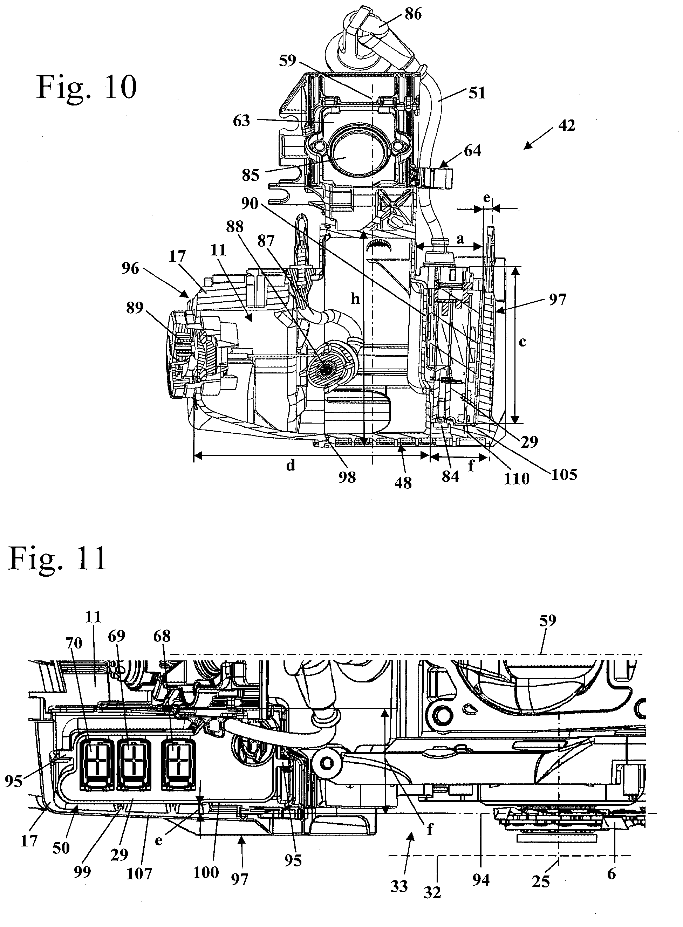

Die Steuereinrichtung 29 ist bezogen auf die Längsebene 59 seitlich neben dem Kraftstofftank 11 angeordnet, wie auch Fig. 10 zeigt. Die seitliche Richtung bezeichnet dabei eine Richtung senkrecht zur Längsebene 59. Im Ausführungsbeispiel ist am Tankgehäuse 17 eine Aufnahme 91 für ein Ende des zweiten Handgriffs 4 ausgebildet. Die Aufnahme 50 ist an der dem Handgriff 3 zugewandten Seite der Aufnahme 91 angeordnet.

Die Steuereinrichtung 29 besitzt eine Breite a, die senkrecht zur Längsebene 59 gemessen ist. Die Längsebene 59 und die Breite a sind auch in Fig. 10 eingezeichnet. Die Breite a ist die Gesamtbreite der Steuereinrichtung 29. Die Breite a ist die kleinste Erstreckung der Steuereinrichtung 29. Die Steuereinrichtung 29 besitzt eine Länge b, die in Abstellposition 42 in horizontaler Richtung und parallel zur Längsebene 59 (Fig. 10) gemessen ist. Die Länge b ist größer als die Breite a. Vorteilhaft beträgt die Länge b mindestens das Doppelte der Breite a. Die Steuereinrichtung 29 besitzt eine Höhe c, die in Abstellposition 42 in senkrechter Richtung, also senkrecht zur Abstellfläche 41 gemessen ist. Die Höhe c ist parallel zur Längsebene 59 und senkrecht zur Breite a und senkrecht zur Länge b gemessen. Die Höhe c ist ebenfalls deutlich größer als die Breite a und beträgt vorteilhaft mindestens das Doppelte der Breite a. Die Länge b und die Höhe c können näherungsweise gleich groß sein. Vorteilhaft beträgt die Länge b das 0,7fache bis 1,3fache der Höhe c. Die Länge b ist die Gesamtlänge der Steuereinrichtung 29. Die Höhe c ist die Gesamthöhe der Steuereinrichtung 29 einschließlich der Höhe der Stecckontakte 67, 68, 69, 70. Wie Fig. 9 auch zeigt, besitzt die Gehäusewand 63 im Ausführungsbeispiel eine Öffnung 85. Durch die Öffnung 85 ist der Ansaugkanal 37 des Verbrennungsmotors 7 (Fig. 3) geführt. Durch die Öffnung 85 wird die Verbrennungsluft von der Luftfiltereinrichtung 35 zum Verbrennungsmotor 7 geleitet (Fig. 3). Die Breite a, die Länge b und die Höhe c können der Breite, Länge und Höhe der Steuereinrichtung 29 entsprechen. Es kann jedoch auch vorteilhaft sein, die Steuereinrichtung 29 gegenüber der Längsebene 59 geneigt anzuordnen, insbesondere um wenige Grad in eine oder mehrere Richtungen. Dadurch können die senkrecht bzw. parallel zur Längsebene 59 gemessene Breite a, Länge b und/oder Höhe c größer oder kleiner als die Gesamtbreite, Gesamtlänge und/oder Gesamthöhe der Steuereinrichtung 29 sein.

Wie Fig. 10 zeigt, ist die Steuereinrichtung 29 seitlich neben dem Kraftstofftank 11 im Tankgehäuse 17 angeordnet. Der Kraftstofftank 11 und die Aufnahme 50 sind integral an einem Gehäuseteil des Tankgehäuses 17 ausgebildet. In den Kraftstofftank 11 ragt eine Kraftstoffleitung 87, an deren Ende ein Saugkopf 88 angeordnet ist, über den Kraftstoff zu dem Kraftstoffventil 44 (Fig. 3) zugeführt wird. Der Kraftstofftank 11 besitzt den Verschlussdeckel 89, der an der Längsseite 96 des Tankgehäuses 17 angeordnet ist. An die gegenüberliegende Längsseite 97 grenzt die Aufnahme 50 an. Der Kraftstofftank 11 und die Aufnahme 50 erstrecken sich zusammen über die gesamte Breite des Tankgehäuses 17. Der Kraftstofftank 11 und die Aufnahme 50 sind durch eine Wand 90 voneinander getrennt, die ebenfalls integral am Tankgehäuse 17 ausgebildet ist. Im Ausführungsbeispiel ist die Aufnahme 50 mit der Wand 90 einteilig als Spritzgussteil ausgebildet. Der Kraftstofftank 11 ist aus zwei Schalen gebildet, die an einer Trennfuge 98 miteinander verbunden, insbesondere miteinander verschweißt sind. In Fig. 10 ist auch die Befestigungsschraube 84 gezeigt, die in die Steuereinrichtung 29 eingeschraubt ist.

Wie Fig. 10 schematisch zeigt, besitzt die Aufnahme 50 einen Boden 105, der die Aufnahme 50 in Richtung auf die Unterseite 48 der Motorsäge 1 hin verschließt. Durch den Boden 105 ragt die Befestigungsschraube 84. Im Boden 105 besitzt die Aufnahme 50 eine Öffnung 110. Durch die Öffnung 110 kann Flüssigkeit wie beispielsweise Kondenswasser nach unten aus der Aufnahme 50 abfließen.

Die Steuereinrichtung 29 ist in der Aufnahme 50 vorteilhaft über die Rippen 95 (Fig. 9) und im Bereich der Befestigungsschraube 84 (Fig. 10) positioniert. In den weiteren Bereichen besitzt die Steuereinrichtung 29 vorteilhaft einen Abstand zur Aufnahme 50. Dadurch können Maßtoleranzen der Steuereinrichtung 29 kompensiert werden, und die Steuereinrichtung 29 kann mit vergleichsweise geringen Anforderungen an die Maßhaltigkeit hergestellt werden.

Der Kraftstofftank 11 besitzt eine Höhe h, die parallel zur Längsebene 59 und in Abstellposition 42 in vertikaler Richtung gemessen ist. Die Höhe h ist dabei die Gesamthöhe des Kraftstofftanks 11. Die Höhe h beträgt vorteilhaft das 0,7fache bis 1,3fache der Höhe c der Steuereinrichtung 29. Dadurch, dass der Kraftstofftank 11 und die Steuereinrichtung 29 näherungsweise gleich hoch sind, ergibt sich eine näherungsweise ebene Oberseite in diesem Bereich des Tankgehäuses 17. Vorteilhaft ist die Höhe h des Kraftstofftanks 11 größer als die Höhe c der Steuereinrichtung 29, so dass der Kraftstofftank 11 die Steuereinrichtung 29 überragt und dadurch die Steckkontakte 67, 68, 69, 70 vor Beschädigung schützt. Bevorzugt ist die Hohe h des Kraftstofftanks 11 so ausgelegt, dass der Kraftstofftank 11 auch in die Steckkontakte 67, 68, 69, 70 eingesteckte Anschlussstecker überragt.

Das Tankgehäuse 17 besitzt eine in horizontaler Richtung und senkrecht zur Längsebene 59 gemessene Breite d, die deutlich größer als die Breite a der Steuereinrichtung 29 ist. Die Breite a der Steuereinrichtung 29 beträgt vorteilhaft weniger als 70%, insbesondere weniger als 50% der senkrecht zur Längsebene 59 und in Abstellposition 42 horizontal gemessenen Breite d des Kraftstofftanks 11. Die Breite d ist dabei die größte in Abstellposition 42 in horizontaler Richtung und senkrecht zur Längsebene 59 gemessene Breite des Tankgehäuses 17. Die Breite d ist die Gesamtbreite des Tankgehäuses 17.

Fig. 11 zeigt die Anordnung der Aufnahme 50 mit der Steuereinrichtung 29 in Bezug auf die Sägekette 6. Durch die Anordnung der Steuereinrichtung 29 an der Längsseite 97 der Motorsäge 1, an der auch die Führungsschiene 5 mit der Sägekette 6 angeordnet ist, kann der Kraftstofftank 11 seitlich in Richtung auf die Längsebene 59 (Fig. 10) versetzt angeordnet werden. Durch die Anordnung der Steuereinrichtung 29 an der Längsseite 97 kann das Tankgehäuse 17 in diesem Bereich weiter nach außen ragen. Dadurch wird der zur Verfügung stehende Bauraum vergrößert. Es ergibt sich eine schlanke und schmale Gestalt der Motorsäge 1. Da benachbart zur Steuereinrichtung 29 ohnehin der Kettenradraum 33 angeordnet ist, stört eine Vergrößerung des Tankgehäuses 17 in diesem Bereich beim Betrieb nicht. Der Kettenraddeckel 32 ist in Fig. 11 schematisch eingezeichnet.

Es ist vorgesehen, dass der senkrecht zur Längsebene 59 gemessene Abstand e der Steuereinrichtung 29 zur Längsmittelebene 94 der Führungsschiene 5 höchstens 2 cm, insbesondere höchstens 1,5 cm beträgt. In einer bevorzugten Ausgestaltung kann die Steuereinrichtung 29 gegenüber der Längsmittelebene 94 nach außen, also von der Längsebene 59 der Motorsäge 1 weg, versetzt sein. Der Abstand e ist dabei zu der der Längsseite 97 benachbart liegenden Außenseite 100 der Steuereinrichtung 29 gemessen.

Wie Fig. 11 zeigt, sind an der Seitenwand 107 der Aufnahme 50 am Tankgehäuse 17 Abstützrippen 99 angeformt, die in die Aufnahme 50 ragen und an denen sich die Steuereinrichtung 29 mit ihrer Längsseite 100 abstützt. Die Abstützrippen 99 sind auch in Fig. 9 gezeigt. Dadurch liegt die Steuereinrichtung 29 nicht flächig an der Seitenwand 107 an, sondern besitzt zur Seitenwand 107 einen Abstand. Auch zu den Seitenwänden 106 und 108 und zur Wand 90, die in Fig. 9 gezeigt sind, besitzt die Steuereinrichtung 29 vorteilhaft einen Abstand. Dadurch, dass zwischen der Steuereinrichtung 29 und den Seitenwänden 10, 107, 108 und der Wand 90 der Aufnahme 50 ein Spalt gebildet ist, kann Wärme leicht abgeführt werden. Die Abstützrippen 99 verstärken gleichzeitig das Tankgehäuse 17 im Bereich der Aufnahme 50.

Zum Kraftstofftank 11 besitzt die Längsmittelebene 94 einen Abstand f, der vorteilhaft mindestens 1,5 cm, insbesondere mindestens 2 cm, bevorzugt mindestens 3 cm beträgt. Der Abstand f ist dabei zu der in Fig. 10 gezeigten Wand 90, und zwar zu dem am weitesten von der Längsebene 59 entfernten Bereich der Wand 90 gemessen. Der Abstand f und der Abstand e sind auch in Fig. 10 eingezeichnet.

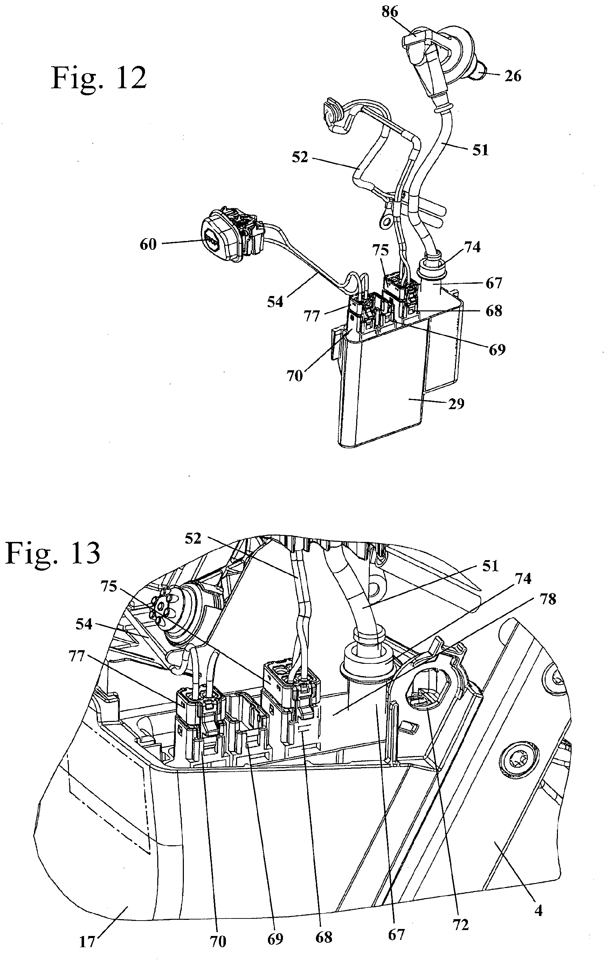

Fig. 12 zeigt weitere Anschlussleitungen 52 und 54 der Motorsäge 1. Die Anschlussleitung 52 dient zur Verbindung der Steuereinrichtung 29 mit dem Generator 28 (Fig. 2), der ebenfalls ein elektrisches Bauteil der Motorsäge 1 bildet. An der Anschlussleitung 52 ist ein Anschlussstecker 75 angeordnet, der am Steckkontakt 68 eingesteckt ist. Die Motorsäge 1 besitzt vorzugsweise einen Stoppschalter 60, der zum Kurzschließen der Zündung dient und der über eine Anschlussleitung 54 mit einem Anschlussstecker 77 verbunden ist. Der Anschlussstecker 77 ist am Steckkontakt 70 eingesteckt. Die Anschlussleitungen 51, 52 und 54 sind im Ausführungsbeispiel jeweils mehradrig ausgebildet.

Wie Fig. 13 zeigt, ist im Ausführungsbeispiel benachbart zur Steuereinrichtung 29, nämlich benachbart zum Steckkontakt 67 der Steuereinrichtung 29, eine Aufnahme 72 am Tankgehäuse 17 ausgebildet, die im Folgenden noch näher beschrieben wird. In Fig. 13 ist auch der zweite Handgriff 4 am Tankgehäuse 17, nämlich in der in Fig. 9 gezeigten Aufnahme 91 des Tankgehäuses 17, gezeigt.

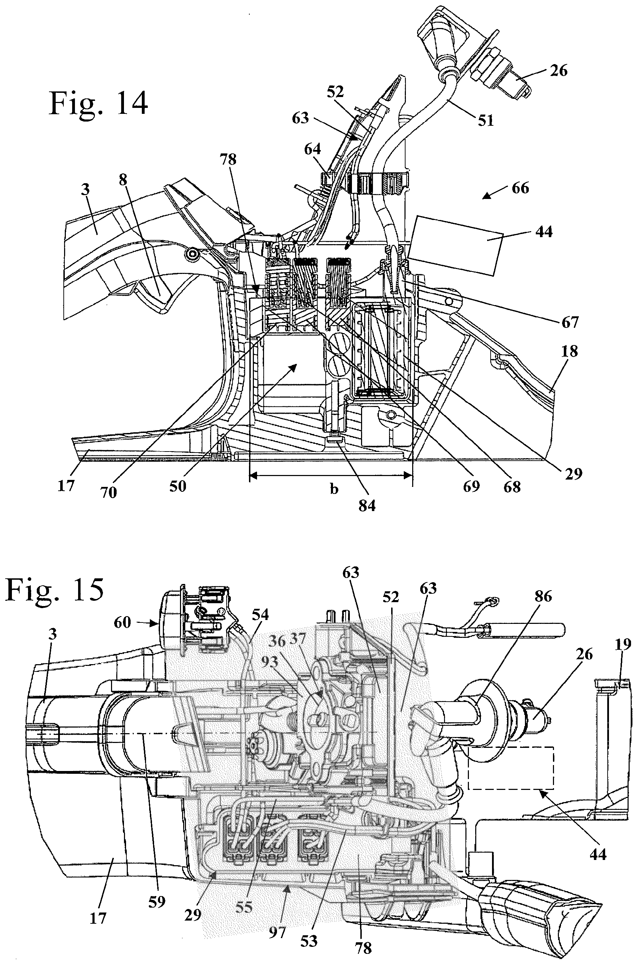

In Fig. 14 sind die Anordnung der Steuereinrichtung 29 in der Aufnahme 50 und die Länge b der Steuereinrichtung 29 gezeigt. Das Kraftstoffventil 44 ist lediglich schematisch gezeigt. Wie die Figuren 14 und 15 zeigen, ist die Anschlussleitung 52, die zur Verbindung mit dem Generator 28 dient, an der Gehäusewand 63 entlang in Richtung auf die gegenüberliegende Längsseite der Motorsäge 1 geführt. Die Anschlussleitung 52 ist in Abstellposition 42 oberhalb eines Drosselgehäuses 93 geführt. Im Drosselgehäuse 93 ist der Ansaugkanal 37 ausgebildet. Im Drosselgehäuse 93 ist ein Drosselelement 36, im Ausführungsbeispiel eine Drosselklappe, schwenkbar gelagert. Der auf der in Fig. 14 hinten liegenden Seite des Tankgehäuses 17 angeordnete Abschnitt der Anschlussleitung 52 ist in Fig. 14 nicht gezeigt.

Fig. 15 zeigt auch die Anschlussleitung 53, die zur Verbindung mit dem Kraftstoffventil 44 dient. In der Darstellung in Fig. 15 ist das Kraftstoffventil 44 lediglich schematisch gezeigt. In Fig. 15 ist zusätzlich eine Anschlussleitung 55 gezeigt, die zur Verbindung mit einer Griffheizung für die Handgriffe 3, 4 dient.

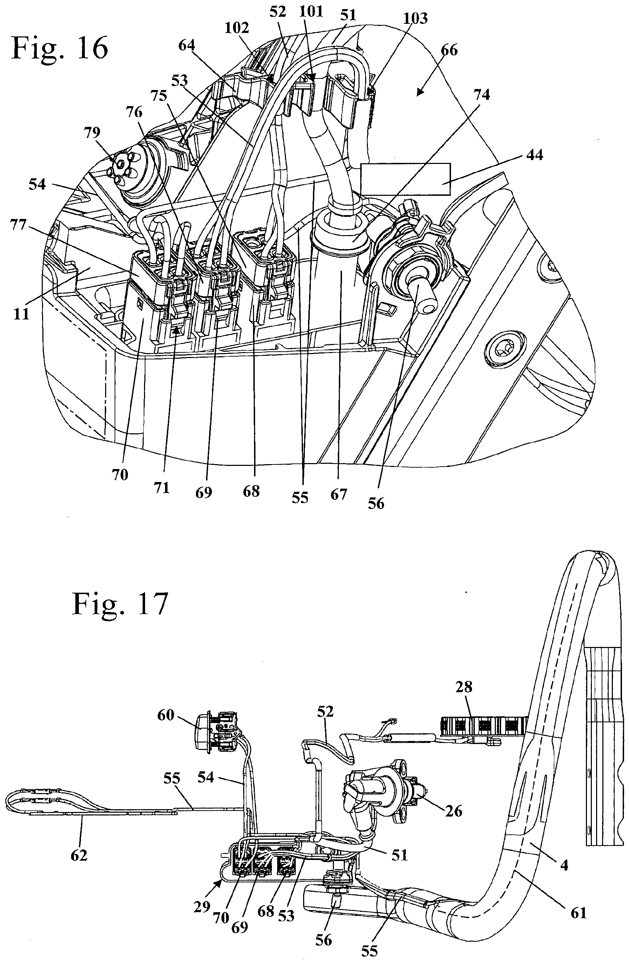

Fig. 16 zeigt die Anordnung der Anschlussleitungen und Anschlussstecker im Ausführungsbeispiel im Einzelnen. Am Steckkontakt 67 ist der Anschlussstecker 74 für die Zündkerze 26 (Fig. 15) eingesteckt. Die Anschlussleitung 51 ist in einer Aufnahme 101 des Halters 64 angeordnet. Der Halter 64 besitzt im Ausführungsbeispiel drei Aufnahmen 101, 102 und 103. Die Aufnahme 101 ist dabei mittig zwischen den Aufnahmen 102 und 103 angeordnet. In der Aufnahme 102 ist die Anschlussleitung 52 für den Generator 28 eingeklipst. Die Aufnahme 102 ist dabei an der dem Handgriff 3 zugewandten Seite der Aufnahme 101 angeordnet und die Aufnahme 103 an der dem Handgriff 3 abgewandten, dem Motorraum 66 zugewandten Seite der Aufnahme 101. Die Anschlussleitung 53 ist mit einem Anschlussstecker 76 in den Steckkontakt 69 eingesteckt. Vom Anschlussstecker 76 ist die Anschlussleitung 53 zunächst in Abstellposition 42 nach oben und über den Bereich der Aufnahmen 101 und 102 geführt. Die Anschlussleitung 53 ist dann von oben nach unten durch die Aufnahme 103 geführt und in dieser geklipst gehalten. Von der Aufnahme 103 ist die Anschlussleitung 53 zu dem in Fig. 16 schematisch dargestellten Kraftstoffventil 44 in den Motorraum 66 geführt. Die Anschlussleitung 54 ist vom Anschlussstecker 77 quer zur Längsebene 59 (Fig. 15) in Richtung auf die gegenüberliegende Längsseite der Motorsäge 1 zum Stoppschalter 60 geführt.

Für die Griffheizung ist im Ausführungsbeispiel eine Anschlussleitung 55 vorgesehen, die zweiadrig ausgebildet und ebenfalls am Anschlussstecker 77 angeschlossen ist. Demnach ist ein gemeinsamer Anschlussstecker 77 für die Anschlussleitung 54 für den Stoppschalter 60 und die Anschlussleitung 55 für die Griffheizung vorgesehen. Die Anschlussleitung 55 ist zu einem Schalter 56 geführt, der in der Aufnahme 72 (Fig. 13) des Tankgehäuses 17 gehalten ist und auf die Außenseite des Gehäuses 2 ragt. Wie Fig. 16 auch zeigt, sind die Anschlussstecker 75, 76, 77 in den Steckkontakten 68, 69, 70 über Rasteinrichtungen 71 fixiert.

Fig. 17 zeigt die Anordnung aller Anschlussleitungen und elektrischer Verbraucher der Motorsäge 1 im Ausführungsbeispiel. Der Drucksensor 45 und der Temperatursensor 46 sind im Ausführungsbeispiel in einem gemeinsamen Gehäuse mit dem Kraftstoffventil 44 angeordnet und deshalb nicht sichtbar. Die elektrische Anbindung von Drucksensor 45 und Temperatursensor 46 erfolgt über die Anschlussleitung 53, über die auch das Kraftstoffventil 44 mit der Steuereinrichtung 29 verbunden ist. In Fig. 17 ist auch der Generator 28 gezeigt, der über die Anschlussleitung 52 mit der Steuereinrichtung 29 verbunden ist. In Fig. 17 ist außerdem eine Heizeinrichtung 61 für den zweiten Handgriff 4 sowie eine Heizeinrichtung 62 für den ersten Handgriff 3 gezeigt.

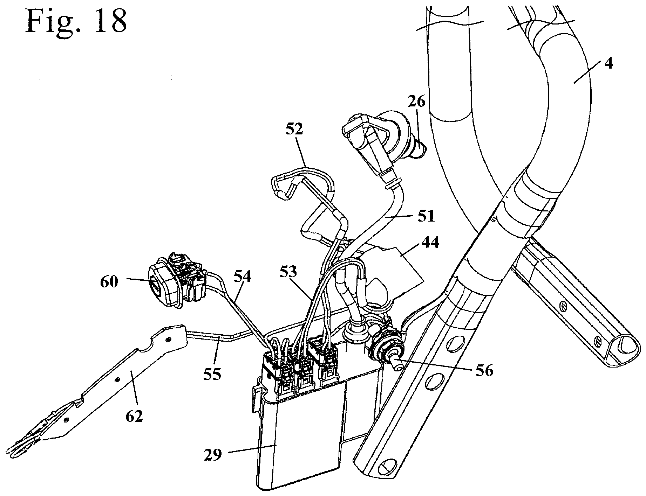

Die Heizeinrichtung 62 ist auch in Fig. 18 sichtbar. Die Heizeinrichtungen 61 und 62 sind über Anschlussleitungen 55 mit dem Schalter 56 und der Steuereinrichtung 29 verbunden. Durch Betätigen des Schalters 56 kann der Bediener die Heizeinrichtungen 61 und 62 gemeinsam ein- oder ausschalten.

## Patentansprüche

1. Handgeführtes Arbeitsgerät mit einem Gehäuse (2), in dem ein Verbrennungsmotor (7) zum Antrieb eines Werkzeugs des Arbeitsgeräts angeordnet ist, mit einem Kraftstofftank (11), mit einer Steuereinrichtung (29) zur Steuerung von mindestens einem elektrischen Bauteil des Arbeitsgeräts, wobei die Steuereinrichtung (29) eine elektronische Steuereinrichtung (29) ist, wobei die Steuereinrichtung (29) mit mindestens einem elektrischen Bauteil des Arbeitsgeräts verbunden ist, und wobei das Arbeitsgerät eine Oberseite (47) besitzt, die beim Abstellen des Arbeitsgeräts in einer üblichen Abstellposition (42) auf einer ebenen, horizontalen Abstellfläche (41) nach oben weist, wobei an einem Handgriff (3) des Arbeitsgeräts mindestens ein Bedienelement zur Bedienung des Verbrennungsmotors (7) angeordnet ist, wobei der Handgriff (3) eine Längsmittelachse (73) aufweist, und wobei eine Längsebene (59) des Arbeitsgeräts in Abstellposition (42) senkrecht ausgerichtet ist und die Längsmittelachse (73) des Handgriffs (3) enthält,
**dadurch gekennzeichnet, dass** die Steuereinrichtung (29) in der üblichen Abstellposition (42) bezogen auf die Längsebene (59) des Arbeitsgeräts, senkrecht zur Längsebene, seitlich neben dem Kraftstofftank (11) angeordnet ist.

2. Arbeitsgerät nach Anspruch 1,
**dadurch gekennzeichnet, dass** das Arbeitsgerät eine Motorsäge (1) ist und dass die Längsebene (59) parallel zu einer Längsmittelebene (94) einer Führungsschiene (5) der Motorsäge (1) verläuft.

3. Arbeitsgerät nach Anspruch 1 oder 2,
**dadurch gekennzeichnet, dass** die Steuereinrichtung (29) in einer in üblicher Abstellposition (42) nach oben offenen Aufnahme (50) des Gehäuses (2) angeordnet ist.

4. Arbeitsgerät nach Anspruch 3,
**dadurch gekennzeichnet, dass** das Gehäuse (2) ein Tankgehäuse (17) besitzt, in dem der Kraftstofftank (11) ausgebildet ist, und dass die Aufnahme (50) in dem Tankgehäuse (17) ausgebildet ist.

5. Arbeitsgerät nach Anspruch 4,
**dadurch gekennzeichnet, dass** die Steuereinrichtung (29) vom Kraftstofftank (7) durch eine Wand (90) des Tankgehäuses (17) getrennt ist.

6. Arbeitsgerät nach einem der Ansprüche 1 bis 5,
**dadurch gekennzeichnet, dass** das Arbeitsgerät eine Luftfiltereinrichtung (35) besitzt, die mindestens ein Filterelement (43) umfasst, dass die Steuereinrichtung (29) in der üblichen Abstellposition (42) unterhalb der Luftfiltereinrichtung (35) angeordnet ist.

7. Arbeitsgerät nach einem der Ansprüche 1 bis 6,
**dadurch gekennzeichnet, dass** die senkrecht zur Längsebene (59) und in Abstellposition (42) horizontal gemessene Breite (a) der Steuereinrichtung (29) weniger als 70% der senkrecht zur Längsebene (59) und in Abstellposition (42) horizontal gemessenen Breite (d) des Kraftstofftanks (11) beträgt.

8. Arbeitsgerät nach einem der Ansprüche 1 bis 7,
**dadurch gekennzeichnet, dass** die parallel zur Längsebene (59) und in Abstellposition (42) horizontal gemessene Länge (b) der Steuereinrichtung (29) größer als die senkrecht zur Längsebene (59) und in Abstellposition (42) horizontal gemessene Breite (a) der Steuereinrichtung (29) ist.

9. Arbeitsgerät nach einem der Ansprüche 1 bis 8,
**dadurch gekennzeichnet, dass** die in Abstellposition (42) in vertikaler Richtung gemessene Höhe (c) der Steuereinrichtung (29) größer als die senkrecht zur Längsebene (59) und in Abstellposition (42) horizontal gemessene Breite (a) ist.

10. Arbeitsgerät nach einem der Ansprüche 1 bis 9,
**dadurch gekennzeichnet, dass** die Steuereinrichtung (29) mindestens einen Steckkontakt (67, 68, 69, 70) besitzt, an dem mindestens ein Anschlussstecker (74, 75, 76, 77) eingesteckt ist, der über mindestens eine Anschlussleitung (51, 52, 53, 54) mit dem mindestens einen elektrischen Bauteil des Arbeitsgeräts verbunden ist.

11. Arbeitsgerät nach Anspruch 9,
**dadurch gekennzeichnet, dass** mindestens ein Anschlussstecker (74, 75, 76, 77) an einer in üblicher Abstellposition (42) nach oben weisenden Oberseite (78) der Steuereinrichtung (29) angeordnet ist.

12. Arbeitsgerät nach Anspruch 10 oder 11,
**dadurch gekennzeichnet, dass** das Arbeitsgerät einen Luftfilterraum (65) und einen Motorraum (66) besitzt und dass an einer Gehäusewand (63) zwischen Luftfilterraum (65) und Motorraum (66) mindestens ein Halter (64) für eine Anschlussleitung (51, 52, 53) festgelegt ist.

13. Arbeitsgerät nach einem der Ansprüche 1 bis 12,
**dadurch gekennzeichnet, dass** der Verbrennungsmotor (7) eine Zündkerze (26) besitzt und dass ein Steckkontakt (67) der Steuereinrichtung (29) über eine Anschlussleitung (51) mit der Zündkerze (26) verbunden ist.

14. Arbeitsgerät nach einem der Ansprüche 1 bis 13,
**dadurch gekennzeichnet, dass** das Arbeitsgerät einen Generator (28) zur Erzeugung von elektrischer Energie besitzt und dass ein Steckkontakt (68) der Steuereinrichtung (29) über eine Anschlussleitung (52) mit dem Generator (28) verbunden ist.

15. Arbeitsgerät nach einem der Ansprüche 1 bis 14,
**dadurch gekennzeichnet, dass** der Verbrennungsmotor (7) ein Kraftstoffventil (44) zur Zufuhr von Kraftstoff besitzt und dass ein Steckkontakt (69) der Steuereinrichtung (29) über eine Anschlussleitung (53) mit dem Kraftstoffventil (44) verbunden ist.

16. Arbeitsgerät nach einem der Ansprüche 1 bis 15,
**dadurch gekennzeichnet, dass** das Arbeitsgerät mindestens eine Heizeinrichtung (61, 62) für einen Handgriff (3, 4) besitzt und dass ein Steckkontakt (70) über eine Anschlussleitung (55) mit der Heizeinrichtung (61, 62) verbunden ist.

17. Arbeitsgerät nach einem der Ansprüche 1 bis 16,
**dadurch gekennzeichnet, dass** das Arbeitsgerät eine Motorsäge (1) ist, die als Werkzeug eine umlaufend um eine Führungsschiene (5) angetriebene Sägekette (6) besitzt, und dass der senkrecht zur Längsebene (59) gemessene Abstand (e) der Längsmittelebene (94) der Führungsschiene (5) zur Steuereinrichtung (29) höchstens 2 cm beträgt.

18. Arbeitsgerät nach Anspruch 17,
**dadurch gekennzeichnet, dass** der senkrecht zur Längsebene (59) gemessene Abstand (f) der Längsmittelebene (94) der Führungsschiene (5) zum Kraftstofftank (11) mindestens 1,5 cm beträgt.

## Claims

1. Hand-held work apparatus having a housing (2) in which a combustion engine (7) for driving a tool of the work apparatus is arranged, having a fuel tank (11), having a control device (29) for controlling at least one electric component of the work apparatus, wherein the control device (29) is an electronic control device (29), wherein the control device (29) is connected to at least one electric component of the work apparatus, and wherein the work apparatus has a top side (47) which faces upwards when the work apparatus is set down in a normal set-down position (42) on a flat, horizontal set-down surface (41), wherein at least one operating element for operating the combustion engine (7) is arranged on a handle (3) of the work apparatus, wherein the handle (3) has a longitudinal central axis (73), and wherein a longitudinal plane (59) of the work apparatus is oriented perpendicularly in the set-down position (42) and contains the longitudinal central axis (73) of the handle (3),
**characterized in that** the control device (29), in the normal set-down position (42), is arranged laterally next to the fuel tank (11), perpendicularly to the longitudinal plane, with regard to the longitudinal plane (59) of the work apparatus.

2. Work apparatus according to Claim 1,
**characterized in that** the work apparatus is a chainsaw (1), and **in that** the longitudinal plane (59) extends parallel to a longitudinal central plane (94) of a guide bar (5) of the chainsaw (1).

3. Work apparatus according to Claim 1 or 2,
**characterized in that** the control device (29) is arranged in a receptacle (50) of the housing (2) that is upwardly open in the normal set-down position (42).

4. Work apparatus according to Claim 3,
**characterized in that** the housing (2) has a tank housing (17) in which the fuel tank (11) is formed, and **in that** the receptacle (50) is formed in the tank housing (17).

5. Work apparatus according to Claim 4,
**characterized in that** the control device (29) is separated from the fuel tank (7) by a wall (90) of the tank housing (17).

6. Work apparatus according to one of Claims 1 to 5,
**characterized in that** the work apparatus has an air filter device (35) which comprises at least one filter element (43), and **in that** the control device (29) is arranged beneath the air filter device (35) in the normal set-down position (42).

7. Work apparatus according to one of Claims 1 to 6,
**characterized in that** the width (a) of the control device (29), measured horizontally perpendicularly to the longitudinal plane (59) and in the set-down position (42), amounts to less than 70% of the width (d) of the fuel tank (11), measured horizontally perpendicularly to the longitudinal plane (59) and in the set-down position (42).

8. Work apparatus according to one of Claims 1 to 7,
**characterized in that** the length (b) of the control device (29), measured horizontally parallel to the longitudinal plane (59) and in the set-down position (42), is greater than the width (a) of the control device (29), measured horizontally perpendicularly to the longitudinal plane (59) and in the set-down position (42).

9. Work apparatus according to one of Claims 1 to 8,
**characterized in that** the height (c) of the control device (29), measured in a vertical direction in the set-down position (42), is greater than the width (a), measured horizontally perpendicularly to the longitudinal plane (59) and in the set-down position (42).

10. Work apparatus according to one of Claims 1 to 9,
**characterized in that** the control device (29) has at least one plug contact (67, 68, 69, 70) at which at least one connector plug (74, 75, 76, 77) is plugged in, which is connected to the at least one electric component of the work apparatus via at least one connection line (51, 52, 53, 54).

11. Work apparatus according to Claim 9,
**characterized in that** at least one connector plug (74, 75, 76, 77) is arranged on a top side (78) of the control device (29) that faces upward in the normal set-down position (42).

12. Work apparatus according to Claim 10 or 11,
**characterized in that** the work apparatus has an air filter compartment (65) and an engine compartment (66), and **in that** at least one holder (64) for a connection line (51, 52, 53) is fastened to a housing wall (63) between the air filter compartment (65) and engine compartment (66).

13. Work apparatus according to one of Claims 1 to 12,
**characterized in that** the combustion engine (7) has a spark plug (26), and **in that** a plug contact (67) of the control device (29) is connected to the spark plug (26) via a connection line (51).

14. Work apparatus according to one of Claims 1 to 13,
**characterized in that** the work apparatus has a generator (28) for generating electrical energy, and **in that** a plug contact (68) of the control device (29) is connected to the generator (28) via a connection line (52).

15. Work apparatus according to one of Claims 1 to 14,
**characterized in that** the combustion engine (7) has a fuel valve (44) for feeding fuel, and **in that** a plug contact (69) of the control device (29) is connected to the fuel valve (44) via a connection line (53).

16. Work apparatus according to one of Claims 1 to 15,
**characterized in that** the work apparatus has at least one heating device (61, 62) for a handle (3, 4), and **in that** a plug contact (70) is connected to the heating device (61, 62) via a connection line (55).

17. Work apparatus according to one of Claims 1 to 16,
**characterized in that** the work apparatus is a chainsaw (1), which has, as tool, a saw chain (6) driven in circulation about a guide bar (5), and **in that** the distance (e), measured perpendicularly to the longitudinal plane (59), of the longitudinal central plane (94) of the guide bar (5) from the control device (29) is at most 2 cm.

18. Work apparatus according to Claim 17,
**characterized in that** the distance (f), measured perpendicularly to the longitudinal plane (59), of the longitudinal central plane (94) of the guide bar (5) from the fuel tank (11) is at least 1.5 cm.

## Revendications

1. Appareil de travail à main, comprenant un carter (2) dans lequel est disposé un moteur à combustion interne (7) pour entraîner un outil de l'appareil de travail, un réservoir de carburant (11), un dispositif de commande (29) pour commander au moins un composant électrique de l'appareil de travail, le dispositif de commande (29) étant un dispositif de commande (29) électronique, le dispositif de commande (29) étant relié à au moins un composant électrique de l'appareil de travail, et l'appareil de travail possédant une face supérieure (47) qui est tournée vers le haut lorsque l'appareil de travail est posé dans une position de pose (42) habituelle sur une surface de pose (41) horizontale et plane, au moins un élément d'actionnement pour actionner le moteur à combustion interne (7) étant disposé sur une poignée (3) de l'appareil de travail, la poignée (3) présentant un axe central longitudinal (73), et un plan longitudinal (59) de l'appareil de travail étant orienté verticalement dans la position de pose (42) et incluant l'axe central longitudinal (73) de la poignée (3),
**caractérisé en ce que** le dispositif de commande (29), dans la position de pose (42) habituelle par rapport au plan longitudinal (59) de l'appareil de travail, est disposé verticalement au plan longitudinal, latéralement à côté du réservoir de carburant (11).

2. Appareil de travail selon la revendication 1,
**caractérisé en ce que** l'appareil de travail est une tronçonneuse (1), et **en ce que** le plan longitudinal (59) s'étend en parallèle à un plan central longitudinal (94) d'un rail de guidage (5) de la tronçonneuse (1).

3. Appareil de travail selon la revendication 1 ou 2,
**caractérisé en ce que** le dispositif de commande (29) est disposé dans un logement (50) du carter (2), ouvert vers le haut dans la position de pose (42) habituelle.

4. Appareil de travail selon la revendication 3,
**caractérisé en ce que** le carter (2) possède un carter de réservoir (17) dans lequel est réalisé le réservoir de carburant (11), et **en ce que** le logement (50) est réalisé dans le carter de réservoir (17).

5. Appareil de travail selon la revendication 4,
**caractérisé en ce que** le dispositif de commande (29) est séparé du réservoir de carburant (7) par une paroi (90) du carter de réservoir (17).

6. Appareil de travail selon l'une quelconque des revendications 1 à 5, **caractérisé en ce que** l'appareil de travail possède un dispositif de filtre à air (35) qui comprend au moins un élément filtrant (43), **en ce que** le dispositif de commande (29) est disposé au-dessous du dispositif de filtre à air (35) dans la position de pose habituelle (42).

7. Appareil de travail selon l'une quelconque des revendications 1 à 6, **caractérisé en ce que** la largeur (a) du dispositif de commande (29), mesurée verticalement au plan longitudinal (59) et horizontalement dans la position de pose (42), est inférieure à 70 % de la largeur (d) du réservoir de carburant (11), mesurée verticalement au plan longitudinal (59) et horizontalement dans la position de pose (42).

8. Appareil de travail selon l'une quelconque des revendications 1 à 7, **caractérisé en ce que** la longueur (b) du dispositif de commande (29), mesurée parallèlement au plan longitudinal (59) et horizontalement dans la position de pose (42), est supérieure à la largeur (a) du dispositif de commande (29), mesurée verticalement au plan longitudinal (59) et horizontalement dans la position de pose (42).

9. Appareil de travail selon l'une quelconque des revendications 1 à 8, **caractérisé en ce que** la hauteur (c) du dispositif de commande (29), mesurée dans la direction verticale dans la position de pose (42), est supérieure à la largeur (a) mesurée verticalement au plan longitudinal (59) et horizontalement dans la position de pose (42).

10. Appareil de travail selon l'une quelconque des revendications 1 à 9, **caractérisé en ce que** le dispositif de commande (29) possède au moins un contact à fiche (67, 68, 69, 70) dans lequel est enfichée au moins une fiche de raccordement (74, 75, 76, 77) qui est reliée par l'intermédiaire d'au moins une ligne de raccordement (51, 52, 53, 54) audit au moins un composant électrique de l'appareil de travail.

11. Appareil de travail selon la revendication 9,
**caractérisé en ce qu'**au moins une fiche de raccordement (74, 75, 76, 77) est disposée sur une face supérieure (78) du dispositif de commande (29), tournée vers le haut dans la position de pose (42) habituelle.

12. Appareil de travail selon la revendication 10 ou 11,
**caractérisé en ce que** l'appareil de travail possède un espace de filtre à air (65) et un espace de moteur (66), et **en ce que** sur une paroi de carter (63) entre l'espace de filtre à air (65) et l'espace de moteur (66), au moins un support (64) pour une ligne de raccordement (51, 52, 53) est fixé.

13. Appareil de travail selon l'une quelconque des revendications 1 à 12, **caractérisé en ce que** le moteur à combustion interne (7) possède une bougie d'allumage (26), et **en ce qu'**un contact à fiche (67) du dispositif de commande (29) est relié à la bougie d'allumage (26) par l'intermédiaire d'une ligne de raccordement (51).

14. Appareil de travail selon l'une quelconque des revendications 1 à 13, **caractérisé en ce que** l'appareil de travail possède un générateur (28) pour produire de l'énergie électrique, et **en ce qu'**un contact à fiche (68) du dispositif de commande (29) est relié au générateur (28) par l'intermédiaire d'une ligne de raccordement (52).

15. Appareil de travail selon l'une quelconque des revendications 1 à 14, **caractérisé en ce que** le moteur à combustion interne (7) possède une soupape de carburant (44) pour apporter du carburant, et **en ce qu'**un contact à fiche (69) du dispositif de commande (29) est relié à la soupape de carburant (44) par l'intermédiaire d'une ligne de raccordement (53).

16. Appareil de travail selon l'une quelconque des revendications 1 à 15, **caractérisé en ce que** l'appareil de travail possède au moins un dispositif de chauffage (61, 62) pour une poignée (3, 4), et **en ce qu'**un contact à fiche (70) est relié au dispositif de chauffage (61, 62) par l'intermédiaire d'une ligne de raccordement (55).

17. Appareil de travail selon l'une quelconque des revendications 1 à 16, **caractérisé en ce que** l'appareil de travail est une tronçonneuse (1) qui possède comme outil une chaîne à scier (6) entraînée en rotation autour d'un rail de guidage (5), et **en ce que** la distance (e), mesurée verticalement au plan longitudinal (59), entre le plan central longitudinal (94) du rail de guidage (5) et le dispositif de commande (29) mesure au plus 2 cm.

18. Appareil de travail selon la revendication 17,
**caractérisé en ce que** la distance (f), mesurée verticalement au plan longitudinal (59), entre le plan central longitudinal (94) du rail de guidage (5) et le réservoir de carburant (11) mesure au moins 1,5 cm.
